(19) Europäisches Patentamt
European Patent Office
Office européen des brevets

(11) **EP 2 446 751 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **11187423.6**

(22) Anmeldetag: **02.11.2011**

(51) Int Cl.:
*C08L 3/02* *(2006.01)*  *C11D 3/50* *(2006.01)*
*A23L 3/00* *(2006.01)*  *A23P 10/30* *(2016.01)*
*A23L 29/30* *(2016.01)*  *A23L 27/00* *(2016.01)*
*C08B 30/18* *(2006.01)*

(54) **Hitzestabile Aromapartikel mit hohem Impact**

Heat-stable aroma particle with high impact

Particules aromatiques stables à la chaleur et à impact élevé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2010 US 409214 P**

(43) Veröffentlichungstag der Anmeldung:
**02.05.2012 Patentblatt 2012/18**

(73) Patentinhaber: **Symrise AG**
**37603 Holzminden (DE)**

(72) Erfinder: **Siegel, Sven**
**37671 Höxter (DE)**

(74) Vertreter: **Fabry, Bernd**
**IP2 Patentanwalts GmbH**
**Schlossstrasse 523**
**41238 Mönchengladbach (DE)**

(56) Entgegenhaltungen:
**EP-A1- 0 673 605    EP-A1- 1 362 869**
**EP-A2- 0 846 704**

**Beschreibung**

Die vorliegende Erfindung betrifft Inklusionsprodukte enthaltend oder bestehend aus einem oder mehreren Aromastoffen und einer Maltodextrinfraktion, sowie der Ernährung oder dem Genuss dienende Zubereitungen oder Halbfertigwaren enthaltend solche Inklusionsprodukte. Erfindungsgemäß wird auch ein Herstellverfahren für erfindungsgemäße Inklusionsprodukte angegeben. Die Erfindung betrifft ferner Maltodextrinfraktionen, insbesondere solche, die zum Herstellen erfindungsgemäßer Inklusionsprodukte geeignet sind, und entsprechende Verwendungen erfindungsgemäßer Maltodextrinfraktionen.

Aromastoffe sind überwiegend flüchtige Verbindungen, die während der Lagerung oder in Verarbeitungsprozessen der Lebensmittelindustrie hohe Verlustraten aufweisen, beispielsweise durch Verflüchtigung, Verdampfen, Verdunsten, Wasserdampfdestillation und Oxidation. Aufgrund dieser genannten und weiteren negativen Umstände weisen Aromastoffe in den verschiedensten Anwendungsgebieten häufig eine unzureichende Stabilität auf, so dass sich z.B. die beim Verzehr wahrgenommene Aromaintensität verringern, das Aromaprofil verändern und ggf. die Bildung unerwünscht schmeckender Aromafehlnoten auftreten können.

Zur Stabilisierung von Aromastoffen setzt man im bekannten Stand der Technik überwiegend Zusatzstoffe, wie zum Beispiel Antioxidantien, ein oder/und schützt die Aromastoffe durch eine Verkapselung. Die Verwendung von Zusatzstoffen sollte jedoch nur erfolgen, sofern die Verwendung unbedingt notwendig ist, und auch dann sollte die verwendete Menge möglichst gering gehalten werden. Auch tragen Antioxidantien als solche in der Regel nicht zur Verminderung der Flüchtigkeit von Aromastoffen bei.

In der Lebensmitteltechnik besteht ein ständiges Bedürfnis, Aromen gegenüber Verarbeitungsschritten zu stabilisieren. Insbesondere ist es wichtig, Aromen derart bereitzustellen, dass sie auch bei in der Lebensmitteltechnologie ansonsten üblichen hohen Temperaturen stabil bleiben und ihre Intensität nicht verlieren bzw. keine unerwünschten Nebennoten ausbilden. Zum Bereitstellen entsprechend stabilisierter Aromen wird teilweise versucht, diese in unterschiedlichsten Materialien zu verkapseln, beispielsweise durch Aufnahme in Hefe-Ghosts, oder durch Inkludieren oder Dispergieren in einer Trägermatrix.

Die US 2010/196542 A1 offenbart ein Verkapselungsverfahren, bei dem Leguminosen-Stärke zu einem Maltodextrinfraktion- und/oder Glukosesirup verarbeitet und zum Verkapseln von hydrophoben organischen Verbindungen verwendet wird. Die Verbindungen können mit einem Kneter der Maltodextrinfraktion und/oder dehydriertem Glukosesirup zugemischt werden. Nachteilig daran ist jedoch, dass die Weiterverarbeitung hochviskoser gekneteter Massen aufwendig ist, dies gilt insbesondere auch für ihre Trocknung im technischen Maßstab, d.h bei der Herstellung von Produktmengen größer als 20 kg, bevorzugt größer 50 kg und besonders bevorzugt größer 100 kg. Ferner wird ein Verfahren für sprühgetrocknetes Limonen beschrieben, wobei das Limonen aufgenommen wird in eine wässrige Lösung eines Emulgators und des Maltodextrinfraktion- und/oder Glukosesirups. Der Wassergehalt der Mischung vor dem Sprühtrocknen ist nicht angegeben. Es entstehen keine Einschlussverbindungen im Sinne dieser Erfindung.

Die WO2006/106519 A2 und die WO 2006/106520 A2 offenbaren jeweils hydrophile Dispersionen, die Nanopartikel eines hydrophilen Einschlusskomplexes mit aktiven Substanzen enthalten, sowie die Herstellung solcher Dispersionen. Mit den darin geschriebenen Ausgangsstoffen und Verfahren lassen sich jedoch keine Inklusionsverbindungen herstellen, die äußerst wirtschaftlich getrocknet werden können. Vielmehr verursachen die verwendeten Ausgangsstoffe eine hohe Viskosität in Wasser, so dass bei der Herstellung mit üblichen lebensmitteltechnischen Verarbeitungsgeräten viel Wasser verwendet werden muss. Dieses muss abgetrennt werden, was zu hohen Verlusten an aktiven Substanzen und/oder einem hohen Energieaufwand führt.

Die PCT/EP2010/057365 offenbart die Herstellung von Inklusionsverbindungen von Aromastoffen mit Polymeren aus Glukose und/oder glukoseartigen Monomeren.

EP1362869A1 beschreibt ein Verfahren zur Herstellung von resistente Stärke mittels der Verwendung von Isoamylase bei der Hydrolyse der Stärke.

Neben dem üblicherweise hohen benötigten Wassergehalt oder, bei niedrigem Wassergehalt, der hohen Viskosität der zu verarbeitenden Materialien zum Inkludieren von Aromen in Trägern und damit der wirtschaftlich schlechten Herstellungsweise solcher Inklusionsprodukte ist ferner nachteilig, dass derart verkapselte Aromen während des Verzehrs in der Regel sehr verzögert freigesetzt werden, so dass die Aromawahrnehmung in den ersten Sekunden des Verzehrs (auch "Aromaimpakt" genannt) gering ist. Beim Verzehr sollte jedoch das Aroma möglichst schnell wahrgenommen werden, um einen guten Eindruck zu erzeugen.

Der Impakt im Sinne dieser Erfindung ist definiert als Quotient der Aromaintensität eines verkapselten Aromastoffs zur Aromaintensität der nicht verkapselten (originären) Aromastoffe, wobei die Aromaintensitäten wie folgt bestimmt werden. Die Aromaintensität der originären Aromastoffe (oder Mischungen daraus) wird bei einer üblichen Dosierung in 10 ml Wasser (20°C) durch Verkosten auf einer Skala von 1-10 bestimmt, wobei 1 = nicht wahrnehmbar und 10 = äußerst stark bedeuten. Die Bestimmung der Aromaintensität erfolgt 3 Sekunden nach dem Einnehmen, wobei die Probe nicht geschluckt wird. Nach der Geschmacksneutralisierung wird die Probe mit der zu untersuchenden Probe des verkapselten Aromastoffs verkostet. Dabei ist die Probenmenge so festzusetzen, dass die Probe insgesamt die gleiche Menge an Aromastoff enthält wie der erstverkostete originäre Aromastoff. Die Probe wird in 10 ml Wasser (20°C) gegeben, sofort für 10 Sekunden kräftig mit einem Spatel gerührt und unmittelbar im Anschluss verkostet. Die Bestimmung der Aromaintensität erfolgt ebenfalls nach 3 Sekunden nach der Einnahme. Erfindungsgemäß beträgt der so ermittelte Impakt bevorzugt >0,5 besonders bevorzugt > 0,7 und insbesondere bevorzugt >0,85.

Es war deshalb die Aufgabe der vorliegenden Erfindung, Aromen so bereitzustellen, dass sie während der Lagerung und der Verarbeitung in und zu Lebensmitteln nur geringe Verluste erleiden und/oder nur geringe oder vorzugsweise keine Nebennoten entwickeln. Ferner sollten die Aromen einen hohen Aromaimpakt aufweisen. Insbesondere sollten entsprechende Darreichungsformen für hitzeempfindliche Aromen bereitgestellt werden. Darüber hinaus war es eine weitere Aufgabe der Erfindung, Mittel zum Herstellen erfindungsgemäßer Darreichungsformen und Herstellverfahren zum Herstellen erfindungsgemäßer Darreichungsformen anzugeben. Weitere Vorteile der Erfindung werden nachstehend noch beschrieben.

Erfindungsgemäß wird deshalb eine retrogradierte isolierte Maltodextrinfraktion angegeben, dadurch gekennzeichnet, dass

a) eine 25 Gew.-%ige isolierte Maltodextrinfraktion, bezogen auf den Trockengehalt an Maltodextrin, bei einer Temperatur von 100°C und 1013 hPa und einem pH von 7 zu mehr als 95 Gew.-% in Wasser löslich ist, und jeweils bestimmt durch ein Verfahren mit den Schritten:

(i) Herstellen einer Dispersion aus 12,5 g der trockenen Maltodextrinfraktion in 37,5 g Wasser bei einem pH von 7,
(ii) Erhitzen der Dispersion auf 100 °C bei 1013 hPa zum Auflösenlassen der Maltodextrinfraktion,
(iii) Abkühlenlassen der erhitzten Mischung auf 50 °C,
(iv) Abzentrifugieren der abgekühlten Mischung bei 12000g für 15 min,
(v) Abdenkantieren des Überstandes,
(vi) Aufschlämmen des Sediments mit 37,5 g Wasser einer Temperatur von 5 °C und Abzentrifugieren der Aufschlämmung bei 12000g für 15 min, anschließend Abdekantieren des Überstandes,
(vii) Wiederholen von Schritt (vi),
(viii) Trocknen des in Schritt (vii) gewonnenen Sediments und Auswiegen des getrockneten Sediments,

und

b) eine Dispersion von 25 Gew.-% der isolierten Maltodextrinfraktion, bezogen auf den Trockengehalt an Maltodextrin, in 75 Ges.-% Wasser, pH7, nach Retrogradation und 24h ruhender Lagerung bei 5°C eine Viskosität von 10-500 mPas besitzt, jeweils gemessen bei 25°C, 1013 hPa mit einem Platte-Platte-Viskosimeter und einer Scherrate von 1000s-1,

wobei die retrogradierte Maltodextrinfraktion hergestellt wird mittels eines Verfahrens umfassend die Schritte:

(i) Bereitstellen eines Maltodextrins mit einem DE-Wert von 7-14, bevorzugt von 8-13, mehr bevorzugt von 9-12 und besonders bevorzugt von 9-11,
(ii) Herstellen einer 15-70 Gew.- % igen Lösung des Maltodextrins in Wasser bei einer Temperatur von 10-100 °C und einem pH von 5-9,
(iii) Retrogradieren bei einer Temperatur von -5 bis 30 °C über einen Zeitraum von 1-48 h,(iv) Abtrennen der retrogradierten Maltodextrinfraktion,

wobei das Maltodextrin aus dem Schritt (i) aus der hydrolyse von Stärke mit alpha- oder beta-Amylasen gewonnen wird. Die Viskosität wird vorzugsweise bestimmt mit einem Bohlin CVO1000-Viskosimeter.

Die erfindungsgemäß isolierte Maltodextrinfraktion besitzt eine Reihe von Vorteilen, die sie zum Herstellen von Aromastoff-Inklusionsprodukten besonders geeignet macht. Insbesondere ist die Maltodextrinfraktion bei einer Temperatur von maximal 100°C praktisch vollständig wasserlöslich, ohne dass ein hoher Druck und/oder ein hoher pH-Wert zum Lösen der Maltodextrinfraktion in Wasser erforderlich wäre. Dies ermöglicht es, wie nachfolgend beschrieben Aroma-Inklusionsprodukte auch mit solchen Aromen wirtschaftlich herzustellen, die in besonderem Maße temperatur- und/oder alkaliempfindlich sind. Das Verfahren zum Bestimmen der Maltodextrinfraktion-Löslichkeit in Wasser wird weiter unten näher beschrieben. Gegenüber einer nicht-isolierten Maltodextrinfraktion besitzt die erfindungsgemäße isolierte Maltodextrinfraktion den Vorteil, dass aufgrund der praktisch vollständigen Abwesenheit nicht-retrogradierenden Maltodextrins und nicht-löslichen Maltodextrins bzw. nicht löslicher Stärke die Viskosität einer wässrigen Lösung der Maltodextrinfraktion auch unter Standardbedingungen (25°C, 1013 hPa) gering bleibt und sich somit leicht verarbeiten lässt, wobei praktisch der gesamte Anteil an Maltodextrinfraktion zum Inkludieren bzw. verkapseln von Aromen genutzt werden kann. Dies bewirkt eine hohe Ausbeute an inkludierten ggf. anderweitig verkapselten Aromastoffen bei Durchführen eines erfindungsgemäßen Verkapselungsverfahren bzw. Inklusionsverfahrens.

Eine derartig hergestellte retrogradierte Maltodextrinfraktion besitzt vorteilhafterweise die oben beschriebenen Eigenschaften (a) und/oder (b) einer erfindungsgemäß retrogradierenden isolierten Maltodextrinfraktion. Sie verwirklicht somit die Vorteile einer erfindungsgemäßen retrogradierenden isolierten Maltodextrinfraktion. Im Folgenden wird deshalb nicht zwischen einer erfindungsgemäßen retrogradierenden und einer erfindungsgemäßen retrogradierten Maltodextrinfraktion unterschieden. Soweit von einer erfindungsgemäßen retrogradierenden Maltodextrinfraktion die Rede ist, kann diese insbesondere eine erfindungsgemäße retrogradierte Maltodextrinfraktion sein und umgekehrt.
Zum Herstellen einer erfindungsgemäßen Maltodextrinfraktion wird vorzugsweise Stärke hydrolysiert. Das Hydrolysieren von Stärke erfolgt mit alpha-oder beta-Amylasen.

Die zu hydrolysierende Stärke ist vorzugsweise Stärke aus Reis, Weizen, Gerste, Roggen, Hafer, Leguminosen und insbesondere Erbsen, Kartoffeln, Tapioka, Maniok, Mais oder Mischungen zweier oder mehrerer solcher Stärken. Besonders bevorzugt ist Kartoffelstärke, da mit dieser hohe Ausbeuten und eine besonders niedrige Viskosität nach Retrogradation (oben Eigenschaft b) erzielt werden kann.

Das aus der Hydrolyse hervorgegangene Maltodextrin besitzt vorzugsweise einen Dextroseäquivalent-Wert ("DE-Wert") von 7-14, bevorzugt von 8-13, mehr bevorzugt von 9-12 und besonders bevorzugt von 9-11. Im Rahmen der Erfindung wurde gefunden, dass Maltodextrine mit höherem DE-Wert sich schlecht zur Gewinnung von retrogradierenden Maltodextrinfraktionen eignen. Aus diesen Maltodextrinen lassen sich entweder keine Maltodextrinfraktionen gewinnen, oder die Ausbeuten der Maltodextrinfraktionen sind sehr gering. Ferner wurde gefunden, dass Maltodextrine mit niedrigerem DE-Wert retrogradierende Fraktionen bilden, die sich nicht wie oben in a) beschrieben praktisch vollständig in Wasser bei höchstens 100°C, 1013 hPa und einem pH von 7 lösen lassen, und/oder die entgegen obiger Eigenschaft b) nach einem erneuten Auflösen und Retrogradieren in Wasser hochviskose Dispersionen bilden.

Der DE-Wert ist ein Maß für den Abbaugrad der Stärke. Niedrige DE-Werte sind charakteristisch für Stärkeabbauprodukte mit vergleichsweise hohem durchschnittlichem Molekulargewicht, hohe DE-Werte kennzeichnen Stärkeabbauprodukte mit geringem durchschnittlichem Molekulargewicht. Die Bestimmung des DE-Wertes erfolgt über das Reduktionsvermögen der Stärkeabbauprodukte. Zur Bestimmung des DE-Wertes wird die Methode nach Lane-Eynon angewendet. Eine ausführliche Beschreibung der Methode wird in Hoffmann, H., Mauch, W., Untze W.: Zucker und Zuckerwaren, 2. Auflage, 1. Nachdruck 2004, S. 234f angegeben.

Das Maltodextrin mit einem DE-Wert von 7-14, bzw. einem der bevorzugten DE-Werte kann in trockener Form oder als wässrige Lösung bereitgestellt werden. Wird es als Lösung bereit gestellt, dann wird es entsprechend den erfindungsgemäßen Anteilen aus Schritt (ii) eingeengt oder verdünnt. Wird bereits eine Maltodextrinlösung mit den in Schritt (ii) definierten Eigenschaften (Maltodextrintrockengehalt, pH und Temperatur) bereitgestellt, dann fallen die Schritte (i) und (ii) zusammen. Auch solche Herstellverfahren sind erfindungsgemäß.

Der Trockengehalt des Maltodextrins wird in Schritt (ii) auf 15-70 Gew.-%, bevorzugt auf 25-65 Gew.-% der gesamten Lösung eingestellt, besonders bevorzugt auf 35-55 Gew.-%. Bei diesen Trockengehalten wird sowohl eine hohe Ausbeute an Maltodextrinfraktion bezogen auf die Gesamtmasse eingesetzten Maltodextrins mit einem DE-Wert von 7-14 erzielt, als auch eine hohe Ausbeute an erfindungsgemäßem retrogradiertem Maltodextrin bezogen auf die Gesamtmasse der in Schritt (ii) hergestellten Lösung, so dass eine hohe Ausbeute pro Ansatz erreicht wird.

Der pH-Wert der in Schritt (ii) hergestellten Lösung des Maltodextrins beträgt 5-9, bevorzugt 6-8 und besonders bevorzugt 6-7. Diese Werte haben sich erfindungsgemäß als besonders vorteilhaft herausgestellt, da bei höheren pH-Werten die Ausbeute an retrogradiertem Maltodextrin bei 24 stündiger Lagerung bei 15°C und 1013 hPa als unwirtschaftlich gering herausgestellt hat, während bei niedrigerem pH eine fortgesetzte Hydrolyse des Maltodextrins und beispielsweise der zur Maltodextrinherstellung besonders bevorzugte Kartoffelstärke erfolgt. Die in Schritt (ii) bereitgestellte Lösung wird bevorzugt bei Umgebungsdruck hergestellt.

Das Retrogradieren zum Gewinnen einer erfindungsgemäßen retrogradierten Maltodextrinfraktion erfolgt vorzugsweise bei einer Temperatur bis höchstens 30°C, insbesondere bevorzugt von -5 bis 30°C, weiter bevorzugt bei einer Temperatur von -5 bis 20°C und besonders bevorzugt bei einer Temperatur von 0 bis 15°C. Es hat sich erfindungsgemäß herausgestellt, dass die Ausbeute an erfindungsgemäßen retrogradiertem Maltodextrin mit höheren Temperaturen abnimmt und innerhalb der erfindungsgemäß gewünschten Zeit bis maximal 48 h, vorzugsweise maximal 24 h und besonders bevorzugt maximal 16 h nicht wirtschaftlich durchzuführen wäre.

Bevorzugt ist deshalb ein Verfahren zum Herstellen einer erfindungsgemäßen retrogradierten Maltodextrinfraktion und ein entsprechend hergestelltes oder herstellbares erfindungsgemäßes retrogradiertes Maltodextrin, wobei in Schritt (ii)eine Lösung mit folgenden Parametern hergestellt wird (aufsteigend geordnet nach dem Rang der Bevorzugung und der Ausbildung der erfindungsgemäß erreichbaren Vorteile):

| Rang | Maltodextrin (DE-Wert), bevorzugt aus Kartoffelsärke | Maltodextrinanteil (Gew.-%) | pH | Temperatur |
|---|---|---|---|---|
| 1 | 7-14 | 15-70 | 5-9 | 10-100 |
| 2 | 7-14 | 15-70 | 6-8 | 10-100 |

(fortgesetzt)

| Rang | Maltodextrin (DE-Wert), bevorzugt aus Kartoffelsärke | Maltodextrinanteil (Gew.-%) | pH | Temperatur |
|---|---|---|---|---|
| 3 | 7-14 | 15-70 | 6-8 | 15-80 |
| 4 | 7-14 | 15-70 | 6-8 | 50-80 |
| 5 | 8-13 | 25-65 | 5-9 | 10-100 |
| 6 | 8-13 | 25-65 | 6-8 | 10-100 |
| 7 | 8-13 | 25-65 | 6-8 | 15-80 |
| 8 | 8-13 | 25-65 | 6-8 | 50-80 |
| 9 | 8-13 | 35-55 | 6-7 | 15-80 |
| 10 | 9-12 | 25-65 | 5-9 | 10-100 |
| 11 | 9-12 | 25-65 | 6-8 | 15-80 |
| 12 | 9-12 | 25-65 | 6-8 | 50-80 |
| 13 | 9-12 | 25-65 | 6-7 | 15-80 |
| 14 | 9-12 | 35-55 | 6-8 | 15-80 |
| 15 | 9-12 | 35-55 | 6-7 | 50-80 |
| 16 | 10 | 15-70 | 5-9 | 10-100 |
| 17 | 10 | 25-65 | 6-8 | 10-100 |
| 18 | 10 | 25-65 | 6-8 | 15-80 |
| 19 | 10 | 25-65 | 6-7 | 15-80 |
| 20 | 10 | 35-65 | 6-7 | 50-80 |

In obiger Tabelle ist also eine Parameterkombination mit höherer Rangzahl bevorzugter als eine Kombination mit niedrigerer Rangzahl. Insbesondere lassen sich die Vorteile der Erfindung mit den bevorzugteren Kombinationen wirtschaftlicher und schneller in der Herstellung erzielen. In Schritt (iv) wird das retrogradierte Maltodextrin durch geeignete Trennverfahren abgetrennt, beispielsweise durch Zentrifugieren, Sedimentieren und/oder Filtern. Das retrogradierte Maltodextrin kann optional nochmals aufgeschlämmt werden in Wasser mit einer Temperatur bis 15°C und einem pH von 5-9, wobei wiederum ein pH von 6-8 bevorzugt und ein pH von 6-7 besonders bevorzugt ist. Nach dem optionalen Aufschlämmen kann das retrogradierte Maltodextrin erneut abgetrennt und somit gereinigt werden.

Eine erfindungsgemäße retrogradierte isolierte Maltodextrinfraktion nach Anspruch 1 besitzt vorzugsweise einen (Rest-)Gehalt an nicht retrogradierendem Maltodextrin von höchstens 30 Gew.-%, bevorzugt von 0,2 bis 20 Gew.-% und besonders bevorzugt von 0,3 bis 10 Gew.-% jeweils bezogen auf die gesamte Maltodextrinfraktion. Dabei gilt ein Maltodextrin als nicht retrogradierend, wenn es bei einem pH von 5-7 und einer Temperatur von 15°C nicht innerhalb von 48 h aus einer 65 Gew.-%igen wässrigen Lösung ausfällt. Maltodextrinfraktionen mit einem wie vorstehend beschrieben niedrigen Gehalt nicht-retrogradierenden Maltodextrins lassen sich mit dem oben beschrieben erfindungsgemäßen Herstellverfahren mit den Schritten (i) bis in (iv) leicht herstellen. Durch den niedrigen Anteil nicht-retrogradierenden Maltodextrins wird erreicht, dass die erfindungsgemäße Maltodextrinfraktion praktisch gänzlich zum Herstellen eines erfindungsgemäßen Inklusionsproduktes einsetzbar ist. Dies ermöglicht ein besonders einfaches und wirtschaftliches Inkludieren von Aromen.

Der Wassergehalt einer erfindungsgemäßen Maltodextrinfraktion beträgt vorzugsweise 5-10 Gew.-% bezogen auf die Summe aus Wasser und Trockenmasse Maltodextrinfraktion. Soweit im Rahmen dieser Erfindung von Trockenmasse oder Trockengehalt Maltodextrin gesprochen wird, so ist damit diejenige Menge an Maltodextrin gemeint, die erhalten wird, wenn wässriges Maltodextrin im Umlufttrockenschrank bei einer Temperatur von 105°C bis zur Gewichtskonstanz getrocknet wird.

Eine erfindungsgemäße retrogradierte Maltodextrinfraktion bzw. erfindungsgemäßes isoliertes retrogradierendes Maltodextrin mit einem Wassergehalt bis 10 Gew.-% ist ohne weiteres zum Herstellen eines erfindungsgemäßen Inklusionsproduktes geeignet. Durch den tolerierbaren Wassergehalt wird zudem der Energieaufwand zum Herstellen eines erfindungsgemäß schüttfähigen Maltodextrin vorteilhaft gering gehalten. Vorzugsweise wird das erfindungsgemäße retrogradierte Maltodextrinfraktion bzw. das erfindungsgemäße isolierte retrogradierende Maltodextrin auf einen Wassergehalt von maximal 10 Gew.-% durch Sprühtrocknen und/oder Trommeltrocknen getrocknet.

Vorzugsweise beträgt also der Wassergehalt einer in Schritt (iv) (wie oben definiert) abgetrennten (und gegebenenfalls getrockneten) retrogradierten Maltodextrinfraktion von 5 bis 10 Gew.-% bezogen auf die gesamte Maltodextrinfraktion. Bevorzugt wird die Maltodextrinfraktion nach Schritt (iv) sprühgetrocknet oder trommelgetrocknet.

Alternativ dazu kann die erfindungsgemäße retrogradierende isolierte Maltodextrinfraktion bzw. die erfindungsgemäße retrogradierte Maltodextrinfraktion auch auf geringere Wassergehalte bis maximal 10 Gew.-% getrocknet sein, beispielsweise durch Sprühtrocknen bzw. Trommeltrocknen.

Eine erfindungsgemäße retrogradierende Maltodextrinfraktion bzw. retrogradierte Maltodextrinfraktion zeichnet sich dadurch aus, dass eine 25 Gew.-% Mischung der Maltodextrinfraktion in Wasser (bezogen auf den Trockengehalt an Maltodextrin) bei pH 7, 100°C und 1013 hPa in Gleichgewicht ein Gehalt von zumindest 95 Gew.-% an gelöster Maltodextrinfraktion aufweisen, bevorzugt von zumindest 99 Gew.-%. Der Anteil an gelöster Maltodextrinfraktion kann erfindungsgemäß bestimmt werden durch ein Verfahren mit den Schritten:

(i) Herstellen einer Dispersion aus 12,5 g der Maltodextrinfraktion (bis zur Gewichtskonstanz getrocknet bei 105°C im Umluftschrank) in 37,5 g Wasser bei einem pH von 7,

(ii) Erhitzen der Dispersion auf 100 °C bei 1013 hPa zum Auflösenlassen der Maltodextrinfraktion,

(iii) Abkühlenlassen der erhitzten Mischung auf 50 °C,

(iv) Abzentrifugieren der abgekühlten Mischung bei 12000g für 15 min,

(v) Abdenkantieren des Überstandes,

(vi) Aufschlämmen des Sediments mit 37,5 g Wasser einer Temperatur von 5°C und einem pH von 7, und Abzentrifugieren der Aufschlämmung bei 12000g für 15 min, anschließend Abdekantieren des Überstandes,

(vii) Wiederholen von Schritt (vi),

(viii) Trocknen des in Schritt (vii) gewonnenen Sediments bis zur Gewichtskonstanz bei 105°C im Umlufttrockenschrank und Auswiegen des getrockneten Sediments.

Auf diese Weise wird der Anteil an nicht-gelöstem Maltodextrin der Maltodextrinfraktion bestimmt. Zieht man diesen Anteil von der Gesamtmenge an in Schritt (i) eingesetztem Maltodextrin ab, so erhält man den Anteil an bei pH 7, 100°C und 1013 hPa wasserlöslicher Maltodextrinfraktion.

Erfindungsgemäß wird ferner eine Maltodextrinfraktionslösung mit einem Wassergehalt von 50 - 95 Gew.-% angegeben, bevorzugt mit einem Wassergehalt von 60-85 Gew.-% und besonders bevorzugt von 70-80 Gew.-%, jeweils bezogen auf die Summe aus Trockengewicht Maltodextrin und Wasser, wobei das Maltodextrin der Maltodextrinfraktionslösung ein erfindungsgemäße Maltodextrinfraktion ist, also eine erfindungsgemäße retrogradierte Maltodextrinfraktion bzw. eine erfindungsgemäße retrogradierende isolierte Maltodextrinfraktion. Eine solche erfindungsgemäße Maltodextrinfraktionslösung ist, wie im Zusammenhang mit dem erfindungsgemäßen Verfahren zum Herstellen eines erfindungsgemäßen Inklusionsproduktes beschrieben wird, besonders vorteilhaft.

Dabei ist es insbesondere vorteilhaft, wenn die erfindungsgemäße Maltodextrinfraktionslösung bei einer Temperatur von 50-100°C und einem Druck von 800-1080 hPa vorliegt, besonders bevorzugt bei einer Temperatur von 60-90°C und besonders bevorzugt bei einer Temperatur von 70-80°C, jeweils bezogen auf einen Druck von 1013 hPa. Bei solchen Bedingungen lassen sich auch temperatursensitive Aromen, wie erfindungsgemäß herausgefunden wurde, besonders effizient zu Inklusionsprodukten weiterverarbeiten.

Als besonders förderlich im Sinne einer wirtschaftlichen Durchführung eines erfindungsgemäßen Herstellverfahrens für ein Inklusionsprodukte hat sich herausgestellt, wenn die Maltodextrinfraktion der Maltodextrinfraktionslösung zu mindestens 70 Gew.-% gelöst ist bezogen auf den Trockengehalt an Maltodextrin der erfindungsgemäßen Maltodextrinfraktion und Wasser, bevorzugt zu mindestens 80 Gew.-%, mehr bevorzugt zu mindestens 90 Gew.-% und besonders bevorzugt zu mindestens 99 Gew.-%. Der Gehalt an nicht gelöster Maltodextrinfraktion wird oben beschrieben bestimmt.

Erfindungsgemäß wird ferner ein Inklusionsprodukt angegeben, bestehend aus einem oder mehreren Aromastoffen und einer erfindungsgemäßen Maltodextrinfraktion, dadurch gekennzeichnet, dass das Produkt

- einen Gehalt von 60-99,8 Gew.-% an erfindungsgemäßer Maltodextrinfraktion aufweist, bevorzugt von 65-99 Gew.-% und besonders bevorzugt von 70-98 Gew.-%,

- einen Gehalt von 0,1-10 Gew.-% an inkludierem Aromastoff bzw. inkludierten Aromastoffen, bevorzugt von 0,2-8 Gew.-% und besonders bevorzugt von 0,6-6 Gew.-%, und

- einen Gehalt von 0,1-30 Gew.-% an dispergiertem Aromastoff bzw. dispergierten Aromastoffen, bevorzugt von 0,8-27 Gew.-% und besonders bevorzugt von 1,4-24 Gew.-%,

jeweils bezogen auf den Gesamtgehalt an Maltodextrinfraktion-Trockengewicht, inkludierten und dispergierten Aromastoffen.

Die vorangehend beschriebenen erfindungsgemäßen Aromastoffinklusionprodukte (und insbesondere die weiter unten beschriebenen bevorzugten Ausgestaltungen davon) weisen zahlreiche Vorteile auf. So sind die inkludierten Aromastoffe darin beispielsweise vor Verflüchtigung, Oxidation und Aromastoff-Aromastoff-Reaktionen besonders geschützt. Die Inklusion der Aromastoffe ermöglicht vorteilhafterweise insbesondere einen Schutz vor negativen Einflüssen wie Verflüchtigung, Verdampfen, Verdunsten, Wasserdampfdestillation, UV-Strahlen, thermische Belastung, Druck und Oxidation. Weitere Vorteile der erfindungsgemäßen Aromastoffinklusionprodukte sind, dass Stärke und das erfindungsgemäße Maltodextrin wegen der weiten Verbreitung in der Natur praktisch überall und in sehr großen Mengen verfügbar ist, als pflanzlicher Rohstoff auch für vegetarische Ernährung geeignet ist, einen neutralen Eigengeschmack aufweist, regulierend auf die Verdauung wirkt und weitere positive gesundheitliche Wirkungen diskutiert werden. Bei allen genannten Vorteilen ist die Verwendung einer erfindungsgemäßen Maltodextrinfraktion sehr kostengünstig. In Kombination mit dem erfindungsgemäßen Verfahren (siehe unten) kann die Stabilisierung von Aromastoffen vorteilhafterweise ohne Zusatz von Antioxidantien erzielt werden.

Die erfindungsgemäßen Aromastoffinklusionprodukte ermöglichen eine besonders gute Stabilisierung der inkludierten Aromastoffe. Die erfindungsgemäßen Aromastoffinklusionprodukte können vorteilhafterweise über einen längeren Zeitraum hinweg ohne großen Aromastoff-Verlust gelagert werden. Das Aromaprofil erfindungsgemäßer Aromastoffinklusionscellulosen kann daher über einen längeren Zeitraum hinweg konstant gehalten werden.

Zudem wird vorteilhafterweise eine hohe Stabilität während der Lebensmittelverarbeitung bzw. -zubereitung gewährleistet. Die erfindungsgemäßen Aromastoffinklusionprodukte können deshalb beispielsweise beim Erhitzen, Backen, Braten, Frittieren, Kochen, Dünsten, Schmoren, Grillen, Dämpfen, Pasteurisieren, Sterilisieren, Extrudieren, Conchieren, Aufstreuen, Einstreuen, Einrühren, Mischen (nass/feucht oder trocken), Mixen, Kneten, Aufschäumen, Schmelzen, Erstarren, Trocknen, Dispergieren von Lebensmitteln eingesetzt werden. Dabei können durch die erfindungsgemäßen Aromastoffinklusionprodukte insbesondere Verluste sowie unerwünschte Reaktionen der (inkludierten) Aromastoffe vermindert oder sogar ausgeschlossen werden. Auch während der Lagerung, des Transports und der Bereithaltung fertiger oder halbfertigen Lebensmittel in beispielsweise Kantinen, Restaurants, Cateringunternehmen, Speditionen, Lagerhallen und Supermärkten sowie beim Verbraucher können die erfindungsgemäßen Aromastoffinklusionprodukte zur Stabilisierung der Aromastoffe beitragen. Überraschend ist, dass die erfindungsgemäßen Aromastoffinklusionprodukte, trotz der hohen Stabilität, insbesondere während des Verzehrs die Freisetzung der inkludierten Aromastoffe ermöglichen, so dass diese vom Konsumenten deutlich wahrgenommen werden können. Die erfindungsgemäßen Aromastoffinklusionprodukte sind somit insbesondere für einen "Delivery on demand" geeignet. Auch können die erfindungsgemäßen Aromastoffinklusionprodukte zur Verlängerung der Aromastofffreisetzung eingesetzt werden, wobei die Anwendung in Kaugummis von besonders großer Bedeutung ist. Zudem kann ein erfindungsgemäßes Aromastoffinklusionprodukt in Abhängigkeit von den inkludierten Aromastoffen gezielt bei der Lebensmittelverarbeitung eingesetzt werden, um ein Lebensmittel zu aromatisieren oder um unangenehm schmeckende Stoffe zu maskieren. Erfindungsgemäße der Ernährung oder dem Genuss dienende Zubereitungen und Halbfertigwaren werden weiter unten beschrieben.

Überraschen hat sich zudem herausgestellt, dass die erfindungsgemäßen Aromastoffinklusionprodukte zur Verlängerung der Aromastofffreisetzung eingesetzt werden, ohne den Impakt (wie eingangs definiert) unter 0,5 zu drücken, bevorzugt nicht unter 0,8. Dies war nicht zu erwarten; vielmehr musste davon ausgegangen werden, dass bei einer verlangsamten Aromastofffreisetzung nur ein niedrigerer Impakt erzielbar sein würde. Dementsprechend wird ein erfindungsgemäßes Inklusionprodukt angegeben mit einem Impakt von mindestens 0,5, vorzugsweise von mindestens 0,8.

Zusätzlich ein erfindungsgemäßes Inklusionprodukt besonders einfach wirtschaftlich und aromastoffschonend herstellen, dabei sei Herstellung auf hochviskosewässrige Dispersionen, hohe Temperaturen und/oder pH-Werte größer als 9 verzichtet werden kann.

Der inkludierte Aromastoffgehalt I (d.h. Gehalt an inkludierten Aromastoffen) einer Probe eines (erfindungsgemäßen) Aromastoffinklusionproduktes kann berechnet werden aus:

$$I = X * \left( 1 - \frac{A2(t=0)}{A1(t=0)} \right)$$

mit

I = inkludierter Aromastoffgehalt

X= Gesamtaromastoffgehalt = Masse Aromastoffe / (Masse Aromastoffe + Masse Maltodextrinfraktion) und

A2(t=0)= Anfangsamplitude zum Zeitpunkt t=0 der Probe

A1(t=0)= Anfangsamplitude zum Zeitpunkt t=0 der Aromastoffe ohne Maltodextrinfraktion, wobei die Aromastoffmenge der Aromastoffgesamtmenge aus der Aromastoff-Celluloseprobe bzw. der Aromastoffinklusionscellulose-Probe entspricht.

Zur Bestimmung des Gesamtaromastoffgehalts X (d.h. Gehalt an inkludierten und nicht inkludierten Aromastoffen) einer Probe können insbesondere destillative und extraktive Probenaufarbeitungen bzw. Kombinationen davon verwendet werden. Insbesondere erfolgt die Probenaufarbeitung durch simultane Destillation und Extraktion (SDE), deren Durchführung dem Fachmann bekannt ist. Dabei ist darauf zu achten, dass die Gewinnung der Aromastoffe erschöpfend erfolgt, weshalb die Aufarbeitung mindestens 4 Stunden dauern sollte. Die Quantifizierung kann durch Gaschromatographie erfolgen.

Üblicherweise geht man bei der Bestimmung von A1(t=0) und A2(t=0) so vor, dass von einer zu untersuchenden Probe der Gesamtaromastoffgehalt X bestimmt wird. A1(t=0) und A2(t=0) werden mit einem NMR-Gerät, z.B. dem Minispec mq 20 der Firma Bruker bestimmt. Zunächst wird ermittelt, wie viel Einwaage der Probe m(Probe) in ein Probenröhrchen passt. Diese variiert in Abhängigkeit der Schüttdichte der Probe und beträgt üblicherweise 1 bis 2 g. Anhand der Masse m(Probe) wird mit Hilfe des Gesamtaromastoffgehaltes X die Masse der darin enthaltenen Aromastoffe m(Aromastoff) berechnet. Eine äquivalente Menge dieser Aromastoffe (ohne Maltodextrinfraktion) wird mit der Masse m(Aromastoff) in ein separates Probenröhrchen eingewogen und in den Probenschacht des NMR-Gerätes gestellt. Als NMR-Experiment wird ein 90° Puls, gefolgt von 180° Pulsen jeweils im Abstand von ca. 1,5 ms gewählt (Liquid Echo). Die Auswertungen finden in der Zeitdomäne statt. Die Anfangsamplitude wird über eine biexponentielle Regression ermittelt. Die Signalverstärkung (Gain) des Gerätes wird so angepasst, dass A1(t=0) der Aromastoffprobe ca. 75 +/- 10 % des Maximalwerts der darstellbaren Signalintensität beträgt. Die so eingestellte Signalverstärkung wird zur Bestimmung von A1(t=0) und A2(t=0) beibehalten. Nach Bestimmung von A1(t=0) wird A2(t=0) der Masse m(Probe) der Probe bestimmt. Es ist besonderer Wert darauf zu legen, dass die Aromastoffe (ohne Maltodextrinfraktion) und die Probe die gleiche Temperatur besitzen.

Ein erfindungsgemäßes Inklusionsprodukt ist herstellbar oder hergestellt mit einem Verfahren umfassend die Schritte:

(i) Herstellen einer Mischung einer erfindungsgemäß retrogradierenden isolierten Maltodextrinfraktion bzw. retrogradierten Maltodextrinfraktion in Wasser bei einem pH von 5-9, wobei der Gehalt an Maltodextrinfraktion (Trockengehalt) in der Mischung 5 - 50 Gew.-% beträgt, bevorzugt 15-40 Gew.-% und besonders bevorzugt 20-30 Gew.-%, und wobei der pH bevorzugt 6-8, besonders bevorzugt von 6-7 beträgt,

(ii) Lösen der Maltodextrinfraktion der in Schritt (i) hergestellten Mischung durch Erhitzen der Mischung auf 50-100°C bei höchstens 1080 hPa, so dass zumindest 70 Gew.-% der Maltodextrinfraktion gelöst ist,

(iii) Abkühlenlassen der in Schritt (ii) erhaltenen Lösung auf eine Temperatur von höchstens 1-30°C zum Herstellen einer Dispersion retrogradierten Maltodextrins, bevorzugt auf eine Temperatur von 5-20°C und besonders bevorzugt von 5-15°C, und

(iv) Zugeben von zu inkludierendem Aromastoff bzw. zu inkludierenden Aromastoffen zur Lösung vor oder während Schritt (iii).

Besonders bevorzugt ist ein erfindungsgemäßes Herstellverfahren und ein so herstellbares beziehungsweise hergestelltes Inklusionsprodukt, bei dem

- Schritt (iv) so durchgeführt wird, dass das Verhältnis von gesamten zugegebenen Aromastoffen zu Maltodextrinfraktion (trocken) 0,01:1 bis 2:1 beträgt, bevorzugt 0,05:1 bis 1:1 und besonders bevorzugt 0,07:1 bis 0,5:1, und/oder

- Schritt (iv) so durchgeführt wird, dass das Verhältnis von gesamten zugegebenen Aromastoffen zu Maltodextrinfraktion (bezogen auf deren Trockengewicht) 0,01:1 bis 2:1 beträgt, bevorzugt 0,05:1 bis 1:1 und besonders bevorzugt 0,07:1 bis 0,5:1.

Der Begriff Aromastoffe wird in der vorliegenden Erfindung im Sinne der Richtlinie des Rates 88/388/EWG vom 22. Juni 1988, veröffentlicht im ABI. L 184 vom 15. Juli 1988, S. 61 verwendet. Aromastoffe sind nach dieser Richtlinie:

"definierte chemische Stoffe mit Aromaeigenschaften, die wie folgt gewonnen werden:

i) durch geeignete physikalische Verfahren (einschließlich Destillation und Extraktion mit Lösungsmitteln) oder enzymatische bzw. mikrobiologische Verfahren aus Stoffen pflanzlichen oder tierischen Ursprungs, die als solche verwendet oder mittels herkömmlicher Lebensmittelzubereitungsverfahren (einschließlich Trocknen, Rösten und Fermentierung) für den menschlichen Verzehr verarbeitet werden;

ii) durch chemische Synthese oder durch Isolierung mit chemischen Verfahren, wobei ihre chemische Beschaffenheit mit einer Substanz identisch ist, die in einem Stoff pflanzlichen oder tierischen Ursprungs im Sinne von Ziffer i) natürlich vorkommt;

iii) durch chemische Synthese, wobei jedoch ihre chemische Beschaffenheit nicht mit einer Substanz identisch ist, die in einem Stoff pflanzlichen oder tierischen Ursprungs im Sinne von Ziffer i) natürlich vorkommt."

Aromastoffe im Sinne dieser Definition kommen insbesondere vor in folgenden Extrakten, etherischen Ölen, Concretes, Absolues, Resinen, Resinoiden, Balsamen bzw. Tinkturen: Amyrisöl; Angelicasamenöl; Angelicawurzelöl; Anisöl; Baldrianöl; Basilikumöl; Baummoos-Absolue; Bayöl; Beifußöl; Benzoeresin; Bergamotteöl; Bienenwachs-Absolue; Birkenteeröl; Bittermandelöl; Bohnenkrautöl; Buccoblätteröl; Cabreuvaöl; Cadeöl; Calmusöl; Campheröl; Canangaöl; Cardamomenöl; Cascarillaöl; Cassiaöl; Cassie-Absolue; Castoreum-Absolue; Cedernblätteröl; Cedernholzöl; Cistusöl; Citronellöl; Citronenöl; Copaivabalsam; Copaivabalsamöl; Corianderöl; Costuswurzelöl; Cuminöl; Cypressenöl; Davanaöl; Dillkrautöl; Dillsamenöl; Eichenmoos-Absolue; Elemiöl; Estragonöl; Eucalyptus-citriodora-Öl; Eucalyptusöl; Fenchelöl; Fichtennadelöl; Galbanumöl; Galbanumresin; Geraniumöl; Grapefruitöl; Guajakholzöl; Gurjunbalsam; Gurjunbalsamöl; Helichrysum-Absolue; Helichrysumöl; Ingweröl; Iriswurzel-Absolue; Iriswurzelöl; Jasmin-Absolue; Kalmusöl; Kamillenöl blau; Kamillenöl römisch; Karottensamenöl; Kaskarillaöl; Kiefernadelöl; Krauseminzöl; Kümmelöl; Labdanumöl; Labdanum-Absolue; Labdanumresin; Lavandin-Absolue; Lavandinöl; Lavendel-Absolue; Lavendelöl; Lemongrasöl; Liebstocköl; Limettenöl destilliert; Limettenöl gepresst; Linaloeöl; Litsea-cubeba-Öl; Lorbeerblätteröl; Macisöl; Majoranöl; Mandarinenöl; Massoirindenöl; Mimosa-Absolue; Moschuskörneröl; Moschustinktur; Muskateller-SalbeiÖl; Muskatnußöl; Myrrhen-Absolue; Myrrhenöl; Myrtenöl; Nelkenblätteröl; Nelkenblütenöl; Neroliöl; Olibanum-Absolue; Olibanumöl; Opopanaxöl; Orangenblüten-Absolue; Orangenöl; Origanumöl; Palmarosaöl; Patchouliöl; Perillaöl; Perubalsamöl; Petersilienblätteröl; Petersiliensamenöl; Petitgrainöl; Pfefferminzöl; Pfefferöl; Pimentöl; Pineöl; Poleyöl; Rosen-Absolue; Rosenholzöl; Rosenöl; Rosmarinöl; Salbeiöl dalmatinisch; Salbeiöl spanisch; Selleriesamenöl; Spiklavendelöl; Sternanisöl; Styraxöl; Tagetesöl; Tannennadelöl; Teebaumöl; Terpentinöl; Thymianöl; Tolubalsam; Tonka-Absolue; Tuberosen-Absolue; Vanilleextrakt; Veilchenblätter-Absolue; Verbenaöl; Vetiveröl; Wacholderbeeröl; Weinhefenöl; Wermutöl; Wintergrünöl; Ylangöl; Ysopöl; Zibet-Absolue; Zimtblätteröl; Zimtrindenöl.

Beispiele erfindungsgemäß einzusetzender Aromastoffe sind aufgelistet in den Abschnitten 1 bis 3 der Entscheidung der Kommission vom 23. Februar 1999 über ein Verzeichnis der in oder auf Lebensmitteln verwendeten Aromastoffe, das gemäß Verordnung (EG) Nr. 2232/96 des Europäischen Parlaments und des Rates vom 28. Oktober 1996 erstellt wurde (1999/217/EG), einzusehen im Amtsblatt der Europäischen Gemeinschaften L 84/1 vom 27. März 1999 sowie im Anhang der Entscheidung der Kommission vom 18. Juli 2000 zur Änderung der Entscheidung 1999/217/EG der Kommission über ein Verzeichnis der in oder auf Lebensmitteln verwendeten Aromastoffe (2000/489/EG), einzusehen im Amtsblatt der Europäischen Gemeinschaften L 197/53 vom 3. August 2000.

Aromastoffe können ausgewählt sein aus:

- der Gruppe der aliphatischen Alkohole wie z.B. Hexanol; Octanol; 3-Octanol; 2,6-Dimethyl-heptanol; 2-Methylheptanol, 2-Methyloctanol; (E)-2-Hexenol; (E)- und (Z)-3-Hexenol; 1-Octen-3-ol; Gemisch von 3,4,5,6,6-Pentamethyl-3/4-hepten-2-ol und 3,5,6,6-Tetramethyl-4-methyleneheptan-2-ol; (E,Z)-2,6-Nonadienol; 3,7 Dimethyl-7-methoxyoctan-2-ol; 9-Decenol; 10-Undecenol; 4-Methyl-3-decen-5-ol;

- der Gruppe der aliphatischen Aldehyde und deren Acetale wie z. B. Hexanal; Heptanal; Octanal; Nonanal; Decanal; Undecanal; Dodecanal; Tridecanal; 2-Methyloctanal; 2 Methylnonanal; (E)-2-Hexenal; (Z)-4-Heptenal; 2,6-Dimethyl-5-heptenal; 10 Undecenal; (E)-4-Decenal; 2-Dodecenal; 2,6,10-Trimethyl-5,9-undecadienal; Heptanaldiethylacetal; 1,1-Dimethoxy-2,2,5-trimethyl-4-hexen;

- der Gruppe der aliphatischen Ketone und deren Oxime wie z.B. 2-Heptanon; 2-Octanon; 3-Octanon; 2-Nonanon; 5-Methyl-3-heptanon; 5-Methyl-3-heptanonoxim; 2,4,4,7-Tetramethyl-6-octen-3-on; der aliphatischen schwefelhaltigen Verbindungen wie z.B. 3-Methylthiohexanol; 3-Methylthiohexylacetat; 3-Mercaptohexanol; 3-Mercaptohexylacetat; 3-Mercaptohexylbutyrat; 3-Acetylthiohexylacetat; 1 Menthen-8-thiol;

- der Gruppe der aliphatischen Nitrile wie z.B. 2-Nonensäurenitril; 2-Tridecensäurenitril; 2,12-Tridecadiensäurenitril; 3,7-Dimethyl-2,6-octadiensäurenitril; 3,7-Dimethyl-6-octensäurenitril;

- der Gruppe der aliphatischen Carbonsäureester wie z.B. (E)- und (Z)-3-Hexenylformiat; Ethylacetoacetat; Isoamylacetat; Hexylacetat; 3,5,5-Trimethylhexylacetat; 3-Methyl-2-butenylacetat; (E)-2-Hexenylacetat; (E)- und (Z)-3-Hexenylacetat; Octylacetat; 3-Octylacetat; 1-Octen-3-ylacetat; Ethylbutyrat; Butylbutyrat; Isoamylbutyrat; Hexylbutyrat; (E)- und (Z)-3-Hexenylisobutyrat; Hexylcrotonat; Ethylisovalerianat; Ethyl-2-methylpentanoat; Ethylhexanoat; Allylhexanoat; Ethylheptanoat; Allylheptanoat; Ethyloctanoat; Ethyl-(E,Z)-2,4-decadienoat; Methyl-2-octinat; Methyl-2-noninat; Allyl-2-isoamyloxyacetat; Methyl-3,7-dimethyl-2,6-octadienoat;

- der Gruppe der acyclischen Terpenalkohole wie z.B. Citronellol; Geraniol; Nerol; Linalool; Lavadulol; Nerolidol; Farnesol; Tetrahydrolinalool; Tetrahydrogeraniol; 2,6 Dimethyl-7-octen-2-ol; 2,6-Dimethyloctan-2-ol; 2-Methyl-6-methylen-7-octen-2-ol; 2,6-Dimethyl-5,7-octadien-2-ol; 2,6-Dimethyl-3,5-octadien-2-ol; 3,7-Dimethyl-4,6-octadien-3-ol; 3,7-Dimethyl-1,5,7-octatrien-3-ol 2,6-Dimethyl-2,5,7-octatrien-1-ol; sowie deren Formiate, Acetate, Propionate, Isobutyrate, Butyrate, Isovalerianate, Pentanoate, Hexanoate, Crotonate, Tiglinate, 3-Methyl-2-butenoate;

- der Gruppe der acyclischen Terpenaldehyde und -ketone wie z.B. Geranial; Neral; Citronellal; 7-Hydroxy-3,7-dimethyloctanal; 7-Methoxy-3,7-dimethyloctanal; 2,6,10-Trimethyl-9-undecenal; Geranylaceton; sowie die Dimethyl- und Diethylacetale von Geranial, Neral, 7-Hydroxy-3,7-dimethyloctanal;

- der Gruppe der cyclischen Terpenalkohole wie z.B. Menthol; Isopulegol; alpha-Terpineol; Terpinenol-4; Menthan-8-ol; Menthan-1-ol; Menthan-7-ol; Borneol; Isoborneol; Linalooloxid; Nopol; Cedrol; Ambrinol; Vetiverol; Guajol; sowie deren Formiate, Acetate, Propionate, Isobutyrate, Butyrate, Isovalerianate, Pentanoate, Hexanoate, Crotonate, Tiglinate, 3-Methyl-2-butenoate;

- der Gruppe der cyclischen Terpenaldehyde und -ketone wie z.B. Menthon; Isomenthon; 8-Mercaptomenthan-3-on; Carvon; Campher; Fenchon; alpha-Ionon; beta-Ionon; alpha-n-Methylionon; beta-n-Methylionon; alpha-Isomethylionon; beta-Isomethylionon; alpha-Iron; alpha-Damascon; beta-Damascon; beta-Damascenon; delta-Damascon; gamma-Damascon; 1-(2,4,4-Trimethyl-2-cyclohexen-1-yl)-2-buten-1-on; 1,3,4,6,7,8a-Hexahydro-1,1,5,5-tetramethyl-2H-2,4a-methanonaphthalen-8(5H)-on; Nootkaton; Dihydronootkaton; alpha-Sinensal; beta-Sinensal;

- der Gruppe der cyclischen Alkohole wie z.B. 4-tert.-Butylcyclohexanol; 3,3,5-Trimethylcyclo-hexanol; 3-Isocamphylcyclohexanol; 2,6,9-Trimethyl-Z2,Z5,E9-cyclododecatrien-1-ol; 2-Isobutyl-4-methyltetrahydro-2H-pyran-4-ol;

- der Gruppe der cycloaliphatischen Alkohole wie z.B. alpha,3,3-Trimethylcyclohexylmethanol; 2 Methyl-4-(2,2,3-trimethyl-3-cyclopent-1-yl)butanol; 2-Methyl-4-(2,2,3-trimethyl-3-cyclopent-1-yl)-2-buten-1-ol; 2-Ethyl-4-(2,2,3-trimethyl-3-cyclopent-1-yl)-2-buten-1-ol; 3-Methyl-5-(2,2,3-trimethyl-3-cyclopent-1-yl)-pentan-2-ol; 3-Methyl-5-(2,2,3-trimethyl-3-cyclopent-1-yl)-4-penten-2-ol; 3,3-Dimethyl-5-(2,2,3-trimethyl-3-cyclopent-1-yl)-4-penten-2-ol; 1-(2,2,6-Trimethylcyclohexyl)pentan-3-ol; 1-(2,2,6-Trimethylcyclohexyl)hexan-3-ol;

- der Gruppe der Ester cycloaliphatischer Carbonsäuren wie z.B. Allyl-3-cyclohexylpropionat; Allylcyclohexyloxyacetat; Methyldihydrojasmonat; Methyljasmonat; Methyl-2-hexyl-3-oxocyclopentancarboxylat; Ethyl-2-ethyl-6,6-dimethyl-2-cyclohexencarboxylat; Ethyl-2,3,6,6-tetramethyl-2-cyclohexencarboxylat; Ethyl-2-methyl-1,3-dioxolan-2-acetat;

- der Gruppe der aromatischen Kohlenwasserstoffe wie z.B. Styrol und Diphenylmethan;

- der Gruppe der araliphatischen Alkohole wie z.B. Benzylalkohol; 1-Phenylethylalkohol; 2 Phenylethylalkohol; 3-Phenylpropanol; 2-Phenylpropanol; 2-Phenoxyethanol; 2,2 Dimethyl-3-phenylpropanol; 2,2-Dimethyl-3-(3-methylphenyl)propanol; 1,1-Dimethyl-2-phenylethylalkohol; 1,1-Dimethyl-3-phenylpropanol; 1-Ethyl-1-methyl-3-phenylpropanol; 2-Methyl-5-phenylpentanol; 3-Methyl-5-phenylpentanol; 3-Phenyl-2-propen-1-ol; 4-Methoxybenzylalkohol; 1-(4-Isopropylphenyl)ethanol;

- der Gruppe der Ester von araliphatischen Alkoholen und aliphatischen Carbonsäuren wie z.B. Benzylacetat; Benzylpropionat; Benzylisobutyrat; Benzylisovalerianat; 2-Phenylethylacetat; 2-Phenylethylpropionat; 2-Phenylethylisobutyrat; 2-Phenylethylisovalerianat; 1-Phenylethylacetat; alpha-Trichlormethylbenzylacetat; alpha,alpha-Dimethylphenylethylacetat; alpha,alpha-Dimethylphenylethylbutyrat; Cinnamylacetat; 2-Phenoxyethylisobutyrat; 4-Methoxybenzylacetat; der araliphatischen Ether wie z.B. 2-Phenylethylmethylether; 2-Phenylethylisoamylether; 2-Phenylethyl-1-ethoxyethylether; Phenylacetaldehyddimethylacetal; Phenylacetaldehyddiethylacetal; Hydratropaaldehyddimethylacetal; Phenylacetaldehydglycerinacetal;

- der Gruppe der aromatischen und araliphatischen Aldehyde wie z.B. Benzaldehyd; Phenylacetaldehyd; 3-Phenylpropanal; Hydratropaaldehyd; 4-Methylbenzaldehyd; 4-Me-thylphenylacetaldehyd; 3-(4-Ethylphenyl)-2,2-dimethylpropanal; 2-Methyl-3-(4-isopropylphenyl)propanal; 2-Methyl-3-(4-tert.-butylphenyl)propanal; 3-(4-tert.-Butyl-phenyl)propanal; Zimtaldehyd; alpha-Butylzimtaldehyd; alpha-Amylzimtaldehyd; alpha-Hexylzimtaldehyd; 3-Methyl-5-phenylpentanal; 4-Methoxybenzaldehyd; 4-Hydroxy-3-methoxybenzaldehyd; 4-Hydroxy-3-ethoxybenzaldehyd; 3,4 Methylendioxybenzaldehyd; 3,4-Dimethoxybenzaldehyd; 2-Methyl-3-(4-methoxyphenyl)propanal; 2-Methyl-3-(4-methylendioxyphenyl)propanal;

- der Gruppe der aromatischen und araliphatischen Ketone wie z.B. Acetophenon; 4-Methylacetophenon; 4-Methoxyacetophenon; 4-tert.-Butyl-2,6-dimethylacetophenon; 4-Phenyl-2-butanon; 4-(4-Hydroxyphenyl)-2-butanon; 1-(2-Naphthalenyl)ethanon; Benzophenon;

- der Gruppe der aromatischen und araliphatischen Carbonsäuren und deren Ester wie z.B. Benzoesäure; Phenylessigsäure; Methylbenzoat; Ethylbenzoat; Hexylbenzoat; Benzylbenzoat; Methylphenylacetat; Ethylphenylacetat; Geranylphenylacetat; Phenylethyl-phenylacetat; Methylcinnamat; Ethylcinnamat; Benzylcinnamat; Phenylethylcinnamat; Cinnamylcinnamat; Allylphenoxyacetat; Methylsalicylat; Isoamylsalicylat; Hexylsalicylat; Cyclohexylsalicylat; Cis-3-Hexenylsalicylat; Benzylsalicylat; Phenylethylsalicylat; Methyl-2,4-dihydroxy-3,6-dimethylbenzoat; Ethyl-3-phenylglycidat; Ethyl-3-methyl-3-phenylglycidat;

- der Gruppe der stickstoffhaltigen aromatischen Verbindungen wie z.B. 2,4,6-Trinitro-1,3-dime-thyl-5-tert.-butylbenzol; 3,5-Dinitro-2,6-dimethyl-4-tert.-butylacetophenon; Zimtsäurenitril; 5-Phenyl-3-methyl-2-pentensäurenitril; 5-Phenyl-3-methylpentansäurenitril; Methylanthranilat; Methy-N-methylanthranilat; Schiff'sche Basen von Methylanthranilat mit 7-Hydroxy-3,7-dimethyloctanal, 2-Methyl-3-(4-tert.-butylphenyl)propanal oder 2,4-Dimethyl-3-cyclohexen-carbaldehyd; 6-Isopropylchinolin; 6-Isobutylchinolin; 6-sec.-Butylchinolin; Indol; Skatol; 2-Methoxy-3-isopropylpyrazin; 2-Isobutyl-3-methoxypyrazin;

- der Gruppe der Phenole, Phenylether und Phenylester wie z.B. Estragol; Anethol; Eugenol; Eugenylmethylether; Isoeugenol; Isoeugenylmethylether; Thymol; Carvacrol; Diphenylether; beta-Naphthylmethylether; beta-Naphthylethylether; beta-Naphthylisobutylether; 1,4-Dimethoxybenzol; Eugenylacetat; 2-Methoxy-4-methylphenol; 2 Ethoxy-5-(1-propenyl)phenol; p-Kresylphenylacetat;

- der Gruppe der heterocyclischen Verbindungen wie z.B. 2,5-Dimethyl-4-hydroxy-2H-furan-3-on; 2-Ethyl-4-hydroxy-5-methyl-2H-furan-3-on; 3-Hydroxy-2-methyl-4H-pyran-4-on; 2 Ethyl-3-hydroxy-4H-pyran-4-on;

- der Gruppe der Lactone wie z.B. 1,4-Octanolid; 3-Methyl-1,4-octanolid; 1,4-Nonanolid; 1,4-Decanolid; 8-Decen-1,4-olid; 1,4-Undecanolid; 1,4-Dodecanolid; 1,5-Decanolid; 1,5-Dodecanolid; 1,15-Pentadecanolid; cis- und trans-11-Pentadecen-1,15-olid; cis- und trans-12-Pentadecen-1,15-olid; 1,16-Hexadecanolid; 9-Hexadecen-1,16-olid; 10-Oxa-1,16-hexadecanolid; 11-Oxa-1,16-hexadecanolid; 12-Oxa-1,16-hexadecanolid; Ethylen-1,12-dodecandioat; Ethylen-1,13-tridecandioat; Cumarin; 2,3-Dihydrocumarin; Octahydrocumarin. Die im Rahmen der vorliegenden Erfindung zu inkludierten Aromastoffe sind ausgewählt aus Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Besonders geeignet ist ein erfindungsgemäßes Inklusionsprodukt-Herstellverfahren zum Inkludieren temperaturempfindlicher Aromastoffe. Diese sind ausgewählt aus den im vorherigen Absatz genannten Aromastoffen, und Mischungen zweier oder mehrerer dieser Aromastoffe.

Erfindungsgemäß bevorzugt ist ein Inklusionsprodukt, bei dem in Schritt (iv) ein Aromastoff bei einer Temperatur der Lösung von höchstens 30°C zugegeben wird, bevorzugt bei 1 bis 30 °C, mehr bevorzugt bei 5 bis 20°C und besonders bevorzugt bei 5 bis 15°C. Es ist ein besonderer Vorteil des erfindungsgemäßen Inklusionsprodukt-Herstellverfahrens und der erfindungsgemäßen retrogradierenden beziehungsweise retrogradierten Maltodextrinfraktion, dass bei den angegebenen Temperaturen nicht sofort und schlagartig eine Retrogradierung der Maltodextrinfraktion erfolgt, sondern dass genügend Zeit für die Zugabe eines oder mehrerer Aromastoffe zum Bilden eines Inklusionsproduktes bleibt. Somit kann der oder die zu inkludierende Aromastoff(e) bei vorteilhaft niedrigen Temperaturen zum Herstellen eines Inklusionsproduktes verarbeitet werden, so dass seine/ihre thermische Beanspruchung gering gehalten wird und ein Zerfallen des Aromastoffes und/oder die Bildung unerwünschter Nebennoten eingeschränkt oder ganz verhindert werden kann. Vorteilhaft ist ferner, dass trotz der möglichen schonenden Behandlung noch immer eine hohe Ausbeute an inkludiertem Aromastoff im fertigen Inklusionsprodukt erreicht wird.

Erfindungsgemäß wird darüber hinaus eine der Ernährung oder dem Genuss dienende Zubereitung oder Halbfertigware angegeben, umfassend eine Menge an erfindungsgemäßem Inklusionsprodukt. Eine solche erfindungsgemäße Zubereitung oder Halbfertigware lässt sich wie oben beschrieben leicht herstellen. Zudem ist das im erfindungsgemäßen Inklusionsprodukt vorliegende Aroma wie oben beschrieben insbesondere vor Lagerungs- und Oxidationsverlusten geschützt und weist einen hohen Aromaimpakt auf.

In einer erfindungsgemäßen der Ernährung oder dem Genuss dienenden Zubereitung oder Halbfertigware beträgt der Gesamtanteil am Inklusionsprodukt bezogen auf das Gesamtgewicht der Zubereitung bzw. Halbfertigware 0,001 bis 10 Gew.-%, bevorzugt 0,01 bis 5 Gew.-% und besonders bevorzugt 0,1 bis 3 Gew.-%.

Die Erfindung wird nachfolgend anhand der Beispiele näher beschrieben, ohne dass diese den Schutzbereich der Ansprüche einschränken sollen. Sofern nicht anders angegeben, beziehen sich dabei alle Prozentangaben auf Masseprozente.

Beispiel 1: Gewinnung einer retrogradierenden Maltodextrinfraktion

250g Maltodextrin aus Kartoffelstärke mit DE-10 werden in einem Erlenmeyerkolben mit 250g siedendem Wasser überbrüht und mit einem Magnetrührer aufgelöst. Der Kolben wird verschlossen und 30 Minuten lang bei 90°C gehalten. Dies dient dem Abtöten lebensmittelrechtlich bedenklicher Keime. Im Kühlschrank werden bei 7°C über einen Zeitraum von 48 h die zur Retrogradation fähigen Maltodextrinanteile ausgefällt. Der Ansatz wird mit 250 ml kaltem Wasser (15°C) verdünnt. Die retrogradierte Maltodextrinfraktion wird mit Hilfe eines Faltenfilters abgetrennt und mit weiteren 250 ml kaltem Wasser (15°C) gewaschen. Die so erhaltene retrogradierte/retrogradierende Maltodextrinfraktion wird bei 60°C über Nacht im Umlufttrockenschrank getrocknet. Die Ausbeute beträgt 109,7g beziehungsweise 43,9 % der Ausgangsmasse.

Beispiel 2: Herstellung eines erfindungsgemäßen Inklusionsproduktes

Die retrogradierende Maltodextrinfraktion aus Beispiel 1 wird mit 90°C heißem Wasser übergossen und mit einem Magnetrührer aufgelöst. Wenn die Lösung auf 50°C abgekühlt ist, wird Geraniol als zu inkludierender Aromastoff hinzugefügt, das Behältnis mit aufgelöster Maltodextrinfraktion und Geraniol wird mit Aluminiumfolie abgedeckt und innerhalb von 3 Stunden unter rühren auf Raumtemperatur (20°C) abgekühlt und für weitere 13 Stunden gerührt. Die so erhaltene Mischung wird auf ein Tablett gegossen und im Umlufttrockenschrank bei 30°C 12 h lang getrocknet. Es wird ein Feststoff erhalten mit einem inkludierten Geraniolgehalt von 3,5 Gew.-% und einem Gesamt-Geraniolgehalt von 9,9 Gew.-%, was einem Gehalt an dispergierten Geraniol von 6,4 Gew.-% ergibt.

Beispiel 3: Inklusionsprodukt ohne erfindungsgemäß retrogradierende Maltodextrinfraktion

Beispiel 2 wird wiederholt, wobei anstelle der erfindungsgemäßen retrogradierenden Maltodextrinfraktion das unbehandelte Maltodextrin mit einem DE-Wert von 10 aus Beispiel 1 eingesetzt wird. Das erhaltene Produkt weist einen Gesamt-Geraniolgehalt von 9,5 Gew-.% und einen Gehalt inkludierten Geraniols von 0,05 Gew.-% auf. Daraus ergibt sich ein Gesamtgehalt dispergierten Geraniols von 9,45 Gew.-%.

Beispiel 4 (vergleichendes Beispiel)

Die Beispiel 1 wird wiederholt, wobei anstelle des Maltodextrins aus Kartoffelstärke mit DE 10 ein Maltodextrin aus Kartoffelstärke mit DE 2 verwendet wird.
Aus dem Maltodextrin mit DE 2 lassen sich 121,3 g einer retrogradierten Fraktion ausfällen, was einer Massenausbeute von 48,5 % Massenausbeute entspricht. Diese ist zwar geringfügig höher als bei dem Maltodextrin mit DE 10, jedoch weist die aus dem Maltodextrin mit DE 2 gewonnene Fraktion nicht die vorteilhaften erfindungsgemäßen Eigenschaften auf. Insbesondere ist diese Fraktion in Wasser bei 100°C unter Umgebungsdruck und bei einem pH-Wert von 7 annähernd unlöslich (Die Löslichkeit beträgt nur 9,3 Gew-%).
Verwendet man die Maltodextrinfraktion aus DE 2 in Beispiel 2 anstelle der dort verwendeten erfindungsgemäßen Maltodextrinfraktion aus DE 10, entsteht ein Produkt mit lediglich einem inkludierten Geraniolgehalt von 0,3 Gew.-% und einem Gesamt-Geraniolgehalt von 9,9 Gew.-%, was einem Gehalt an dispergierten Geraniol von 9,6 Gew.-% ergibt.

Beispiel 5 (vergleichendes Beispiel)

Die Beispiel 1 wird wiederholt, wobei anstelle des Maltodextrins aus Kartoffelstärke mit DE 10 ein Maltodextrin aus Kartoffelstärke mit DE 20 verwendet wird.
Es lassen sich lediglich 351 mg rertrogradierende Fraktion gewinnen. Das Maltodextrin mit DE 20 ist nicht zur Gewinnung einer retrogradierenden Fraktion geeignet, da die Massenausbeute lediglich 0,1 % beträgt.

Beispiele 6 und 7 (vergleichende Beispiele)

Diese Beispiele verdeutlichen das Inklusionsverhalten von Maltodextrinen, die nicht zuvor erfindungsgemäß fraktioniert wurden. Die Herstellung erfolgte wie in Beispiel 2 beschrieben.

| Bsp. | | Gesamt-geraniolgehalt [Gew.-%] | Inkludierter Geraniolgehalt [Gew.-%] | Dispergierter Geraniolgehalt [Gew.-%] | Viskosität* mPas |
|---|---|---|---|---|---|
| 7 | Maltodextrin DE2 (Vergleichdendes Bsp.) | 9,8 | 2,3 | 7,5 | 2251 |
| 8 | Maltodextrin DE20 (Vergleichdendes Bsp.) | 9,8 | 0,0 | 9,8 | 85 |
| 2 | Fraktion aus Maltodextrin DE 10 (erfindungsgemäß) | 9,9 | 3,5 | 6,4 | 97 |
| *Viskosität der Dispersion nach dem Ausfällen der Geranioleinschlussverbindungen | | | | | |

Unter den vergleichsweise aufgeführten Maltodextrinen ist lediglich das Maltodextrin mit DE 2 (ohne vorherige Fraktionierung) zur Bildung von Einschlussverbindungen mit Geraniol in nennenswertem Umfang befähigt. Jedoch findet parallel zur Bildung der Einschlussverbindungen ein enormer Anstieg der Viskosität der Dispersion statt. Insofern erschweren sich die anschließenden Schritte der Weiterverarbeitung und insbesondere kann keine kostengünstige Sprühtrocknung durchgeführt werden.

Die erfindungsgemäße Dispersion weist hingegen bis vor der Trocknung eine sehr niedrige Viskosität auf, so dass auch im weiteren Herstellungsverlauf eine Sprühtrocknung erfolgen kann.

Beispiel 8: Erfindungsgemäßes Inklusionsprodukt mit weiterem Träger

Die retrogradierende Maltodextrinfraktion aus Beispiel 1 (280 g) wird mit 925g heißem Wasser (70°C) übergossen und aufgelöst. Die Lösung wird auf 35°C abgekühlt und ein Zwiebelaroma (100 g) zugefügt. Unter weiterem Rühren wird die Mischung auf 20°C abgekühlt und weitere 3 Stunden gerührt. Anschließend wird Gummi arabicum (120 g) hinzugefügt und aufgelöst. Mithilfe eines Sprühturmes Niro Minor wird der Ansatz bei 180°C Lufteinlasstemperatur und 80°C Luftauslasstemperatur getrocknet.

Der Gesamtaromastoffgehalt beträgt 19,8 Gew.-%, davon liegen 1,8 Gew.-% inkludiert vor sowie 18,0 Gew.-% dispergiert.

Zu Vergleichszwecken wiederholt man die Versuche, wobei man anstelle der Maltodextrinfraktion einmal ein Maltodextrin mit DE 10 (Gesamtaromastoffgehalt des Produktes 19,8 Gew.-%, davon 0,1 Gew.-% inkludiert und 19,7% dispergiert) verwendet, bzw. in einem weiteren Versuch Hefezellwände (Gesamtaromastoffgehalt des Produktes 19,8 Gew.-%, davon 0,0 Gew.-% inkludiert und 19,8% dispergiert) verwendet.

| | |
|---|---|
| Weizenmehl | 61,50% |
| Backpulver | 1,25% |
| Pflanzenfett | 6,25% |
| Maltosesirup | 2,25% |
| Emulgator Lecithin | 1,40% |
| Ammoniumbicarbonat | 1,75% |
| Sprühmagermilchpulver | 1,25% |
| Backfrischhefe | 0,60% |
| Speisesalz | 0,40% |
| Wasser | 23,34% |
| erfindungsgemäßes Inklusionsprodukt bzw. Vergleichsprodukte | 0,01% |
| gesamt | 100,00% |

Die Cracker werden nach dem Mischen der Zutaten bei 200°C gebacken. Die Cräcker werden verkostet und die Intensität des Zwiebelgeschmacks 3 Sekunden nach der Einnahme auf einer Skala von 0-9 (0=kein Zwiebelgeschmack, 9= äußerst starker Zwiebelgeschmack) bewertet.

| | |
|---|---|
| erfindungsgemäßes Inklusionsprodukt | 7 |
| Vergleichsprodukt mit Maltodextrin DE 10 | 3 |

(fortgesetzt)

| Vergleichsprodukt mit Hefezellwänden | 4 |

**Patentansprüche**

1. Retrogradierte isolierte Maltodextrinfraktion, **dadurch gekennzeichnet, dass**

   a) eine 25 Gew.-%ige isolierte Maltodextrinfraktion, bezogen auf den Trockengehalt an Maltodextrin, bei einer Temperatur von 100°C und 1013 hPa und einem pH von 7 zu mehr als 95 Gew.-% in Wasser löslich ist, und jeweils bestimmt wird durch ein Verfahren mit den Schritten:

   (i) Herstellen einer Dispersion aus 12,5 g der trockenen Maltodextrinfraktio in 37,5 g Wasser bei einem pH von 7,
   (ii) Erhitzen der Dispersion auf 100 °C bei 1013 hPa zum Auflösenlassen der Maltodextrinfraktion,
   (iii) Abkühlenlassen der erhitzten Mischung auf 50 °C,
   (iv) Abzentrifugieren der abgekühlten Mischung bei 12000g für 15 min,
   (v) Abdenkantieren des Überstandes,
   (vi) Aufschlämmen des Sediments mit 37,5 g Wasser einer Temperatur von 5 °C und Abzentrifugieren der Aufschlämmung bei 12000g für 15 min, anschließend Abdekantieren des Überstandes,
   (vii) Wiederholen von Schritt (vi),
   (viii) Trocknen des in Schritt (vii) gewonnenen Sediments und Auswiegen des getrockneten Sediments,

   und
   b) eine Dispersion von 25 Gew.-% der isolierten Maltodextrinfraktion, bezogen auf den Trockengehalt an Maltodextrin, in 75 Ges.-% Wasser, pH7, nach Retrogradation und 24h ruhender Lagerung bei 5°C eine Viskosität von 10-500 mPas besitzt, jeweils gemessen bei 25°C, 1013 hPa mit einem Platte-Platte-Viskosimeter und einer Scherrate von $1000s^{-1}$,

   wobei die retrogradierte Maltodextrinfraktion hergestellt wird mittels eines Verfahrens umfassend die Schritte:

   (i) Bereitstellen eines Maltodextrins mit einem DE-Wert von 7-14, bevorzugt von 8-13, mehr bevorzugt von 9-12 und besonders bevorzugt von 9-11,
   (ii) Herstellen einer 15-70 Gew.- % igen Lösung des Maltodextrins in Wasser bei einer Temperatur von 10-100 °C und einem pH von 5-9,
   (iii) Retrogradieren bei einer Temperatur von -5 bis 30 °C über einen Zeitraum von 1-48 h,
   (iv) Abtrennen der retrogradierten Maltodextrinfraktion,

   wobei das Maltodextrin aus dem Schritt (i) aus der Hydrolyse von Stärke mit alpha-oder beta-Amylasen gewonnen wird.

2. Retrogradierte Maltodextrinfraktion nach Anspruch 1, **dadurch gekennzeichnet, dass** die Maltodextrinfraktion einen Gehalt an nicht retrogradierendem Maltodextrin von höchstens 30 Gew.-% besitzt.

3. Retrogradierte Maltodextrinfraktion nach Anspruch 1 oder 2, **dadurch gekennzeichnet, dass** eine 25 Gew.-% ige Mischung der Maltodextrinfraktion in Wasser bei pH 7, 100 °C und 1013 hPa im Gleichgewicht einen Gehalt von zumindest 95 Gew.-% an gelöster Maltodextrinfraktion aufweist.

4. Retrogradierte Maltodextrinfraktion nach einem der Ansprüche 1 bis 3, **dadurch gekennzeichnet, dass** ihr Wassergehalt 5 bis 10 Gew.-% beträgt, bezogen auf die gesamte Maltodextrinfraktion.

5. Maltodextrinfraktionslösung mit einem Wassergehalt von 50-95 Gew.-%, jeweils bezogen auf die Summe aus Maltodextrinfraktion (trocken) und Wasser, **dadurch gekennzeichnet, dass** die Maltodextrinfraktion eine Maltodextrinfraktion nach einem der Ansprüche 1 bis 4 ist.

6. Maltodextrinfraktionslösung nach Anspruch 5, **dadurch gekennzeichnet, dass** die Maltodextrinfraktion zu mindestens 70 Gew.- % gelöst ist, bezogen auf die gesamte Maltodextrinfraktion

7.  Inklusionsprodukt, bestehend aus einem oder mehreren Aromastoffen und einer Maltodextrinfraktion nach einem der Ansprüche 1 bis 4, **dadurch gekennzeichnet, dass** das Produkt

    - einen Gehalt von 60-99,8 Gew.-% an Maltodextrinfraktion nach einem der Ansprüche 1 bis 4 aufweist,
    - einen Gehalt von 0,1-10 Gew.-% an inkludiertem Aromastoff bzw. inkludierten Aromastoffen, und
    - einen Gehalt von 0,1-30 Gew.-% an dispergiertem Aromastoff bzw. dispergierten Aromastoffen,

    jeweils bezogen auf den Gesamtgehalt an Maltodextrinfraktion-Trockengewicht, inkludierten und dispergierten Aromastoffen,

    wobei die Aromastoffen aus der Gruppen bestehend aus Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen ausgewählt sind.

8.  Inklusionsprodukt nach Anspruch 7, hergestellt oder herstellbar mit einem Verfahren umfassend die Schritte:

    (i) Herstellen einer Mischung einer Maltodextrinfraktion nach einem der Ansprüche 1 bis 4 in Wasser bei einem pH von 5-9, wobei der Gehalt an Maltodextrinfraktion (Trockengehalt) in der Mischung 5 - 50 Gew.-% beträgt,
    (ii) Lösen der Maltodextrinfraktion der in Schritt (i) hergestellten Mischung durch Erhitzen der Mischung auf 50-100 °C bei höchstens 1080 hPa, so dass zumindest 70 Gew.-% der Maltodextrinfraktion gelöst ist,
    (iii) Abkühlenlassen der in Schritt (ii) erhaltenen Lösung auf eine Temperatur von höchstens 1-30°C zum Herstellen einer Dispersion retrogradierten Maltodextrins, und

(iv) Zugeben von zu inkludierendem Aromastoff bzw. zu inkludierenden Aromastoffen zur Lösung vor oder während Schritt (iii).

9. Inklusionsprodukt nach Anspruch 8, **dadurch gekennzeichnet, dass**

- Schritt (iv) so durchgeführt wird, dass das Verhältnis von gesamt zugegebenen Aromastoffen zur Maltodextrinfraktion (trocken) 0,01:1 bis 2:1 beträgt und/oder
- in Schritt (iv) ein Aromastoff bei einer Temperatur der Lösung von höchstens 30 °C zugegeben wird, und/oder
- dem Inklusionsprodukt nach Schritt (iii) ein oder mehrere weitere Trägerstoffe ausgewählt aus Gummi arabicum, Stärkeoctenylsuccinat, Alginaten, modifizierten Cellulosen, z.B. Carboxymethylcellulose, Methylcellulose, Ethylcellulose, Agar, Carragen, Johannisbrotkernmehl, Guar, Xanthan, Traganth, Gellan, Pektine, modifizierte Stärken, z.B. oxidierte Stärke, Phosphatstärken, acetylierte Stärke, Stärkeadipate sowie Hydroxypropylstärken zugegeben werden, so dass das Verhältnis von Trägerstoffen zur Maltodextrinfraktion (Trockengewicht) 0,05:1 bis 3:1 beträgt.

10. Der Ernährung oder dem Genuss dienende Zubereitung oder Halbfertigware, umfassend ein Inklusionsprodukt nach einem der Ansprüche 7 bis 9.

11. Der Ernährung oder dem Genuss dienende Zubereitung oder Halbfertigware nach Anspruch 10, **dadurch gekennzeichnet, dass** der Gesamtgehalt am Inklusionsprodukt bezogen auf das Gesamtgewicht der Zubereitung bzw. Halbfertigware 0,001 bis 10 Gew.- % beträgt.

12. Herstellverfahren für ein Aromastoff-Inklusionsprodukt, umfassend die Schritte

(i) Herstellen einer Mischung einer Maltodextrinfraktion nach einem der Ansprüche 1 bis 4 in Wasser bei einem pH von 5-9, wobei der Gehalt an Maltodextrinfraktion (Trockengehalt) in der Mischung 5 - 50 Gew.-% beträgt,
(ii) Lösen der Maltodextrinfraktion der in Schritt (i) hergestellten Mischung durch Erhitzen der Mischung auf 50-100 °C bei höchstens 1080 hPa, so dass zumindest 70 Gew.-% der Maltodextrinfraktion gelöst ist,
(iii) Abkühlenlassen der in Schritt (ii) erhaltenen Lösung auf eine Temperatur von höchstens 1-30 °C zum Herstellen einer Dispersion retrogradierten Maltodextrins, und
(iv) Zugeben von zu inkludierendem Aromastoff bzw. zu inkludierenden Aromastoffen zur Lösung vor oder während Schritt (iii).

13. Verwendung einer Maltodextrinfraktion nach einem der Ansprüche 1 bis 4 zum Herstellen eines Aromastoff-Inklusionsprodukts.

**Claims**

1. Retrograded isolated maltodextrin fraction, **characterized in that**

(a) a 25 wt.-% isolated maltodextrin fraction - calculated on the dry matter of maltodextrin - which is soluble in water by more than 95 wt.-% at a temperature of 100°C and 1013 hPa and pH of 7 and is determined by a process encompassing the following steps:

(i) preparing a dispersion of 12.5 g of a dry maltodextrin fraction in 37.5 g water at a pH of 7;
(ii) heating said dispersion to 100 °C at 1013 hPa to let said maltodextrin fraction dissolve;
(iii) cooling of said heated mixture to 50 °C;
(iv) subjecting said cooled mixture to centrifugation at 12,000 g for 15 minutes;
(v) decanting off the supernatant;
(vi) suspending the sediment with 37.5 g water at a temperature of 5 °C and subjecting said suspension to centrifugation at 12,000 g for 15 minutes followed by decanting off the supernatant;
(vii) repeating step (vi),
(viii) drying the sediment obtained in step (vii) and taring the dried sediment,

and

(b) a dispersion of 25 wt.-% of said isolated maltodextrin fraction - calculated on the dry matter of maltodextrin - in 75 wt.-% water, pH 7, after retrogradation and 24 h of steady storage at 5 °C showing a viscosity of 10-500 mPas, determined at 25 °C, 1013 hPa using a plate-plate viscometer at a shear rate of 1,000 s$^{-1}$,
whereby said retrograded maltodextrin fraction is obtained according to a process comprising the steps:

  (i) providing a maltodextrin having a DE value of 7-14, preferably of 8-13, more preferred of 9-12 and most preferred of 9-11;
  (ii) preparing a 15-70 wt.-% solution of said maltodextrin in water at a temperature of 10-100°C and a pH of 5-9;
  (iii) retrograding at a temperature of -5 to 30 °C over a period of 1-48 h;
  (iv) separating off said retrograded maltodextrin fraction;

whereby said maltodextrin from step (i) is obtained from a hydrolysis of starch by means of alpha- or beta amylases.

2. Retrograded maltodextrin fraction according to Claim 1, **characterized in that** said maltodextrin fraction shows a content of non-retrograded maltodextrin of at most 30 wt.-%.

3. Retrograded maltodextrin fraction according to Claim 1 and/or 2, **characterized in that** a 25 wt.-% mixture of said maltodextrin fraction in water at pH 7, 100 °C and 1013 hPa in its equilibrium shows a content of at least 95 wt.-% of dissolved maltodextrin fraction.

4. Retrograded maltodextrin fraction according to any of Claims 1 to 3, **characterized in that** its water content is 5 to 10 wt.-%, calculated on the total maltodextrin fraction.

5. Solution of a maltodextrin fraction showing a water content of 50-95 wt.-% each calculated on the sum of maltodextrin fraction (dry) and water, **characterized in that** said maltodextrin fraction is a maltodextrin fraction according to Claims 1 to 4.

6. Solution of a maltodextrin fraction according to Claim 5, **characterized in that** said maltodextrin fraction is dissolved by at least 70 wt.-%, calculated on the total maltodextrin fraction.

7. Inclusion product, consisting of one or more aroma compounds and a maltodextrin fraction according to any of Claims 1 to 4, **characterized in that** said product shows

  - a content of 60-99,8 wt.-% of a maltodextrin fraction according to any of Claims 1 to 4;
  - a content of 0.1-10 wt.-% of an included aroma compound or included aroma compounds respectively;
  - a content of 0.1-30 wt.-% of a dispersed aroma compound or dispersed aroma compounds respectively,

each calculated on the total amount of maltodextrin fraction-dry matter, included and dispersed aroma compounds, whereby said aroma compounds are chose from the group consisting of:

acetophenone, allyl capronate, alpha-ionon, beta-ionon, anis aldehyde, anisyl acetatee, anisyl formiatee, benzaldehyde, benzothiazol, benzyl acetate, benzyl alcohol, benzyl benzoate, beta-Ionon, Butylbutyrate, butyl capronate, butylidenphthalid, carvon, camphen, caryophyllen, cineol, cinnamylacetate, citral, citronellol, citronellal, citronellyl acetate, cyclohexyl acetate, cymol, damascone, decalactone, dihydrocumarin, dimethylanthranilate, dimethylanthranilate, dodecalactone, ethoxyethyl acetate, ethylbutyric acid, ethyl butyrate, ethyl caprinate, ethyl capronate, ethylc rotonate, ethyl furaneol, ethyl guajacol, ethyl isobutyrate, ethyl isovalerianate, ethyl lactate, ethylmethyl butyrate, ethyl propionate, eucalyptol, eugenol, ethyl heptylate, 4-(p-Hydroxyphenyl)-2-butanone, gamma decalactone, geraniol, geranyl acetate, grapefruit aldehyde, methyl dihydrojasmonate (z.B. Hedion®), heliotropin, 2-heptanone, 3-heptanone, 4-heptanone, trans-2-heptenal, cis-4-heptenal, trans-2-hexenal, cis-3-hexenol, trans-2-hexenoic acid, trans-3-hexenoic acid, cis-2-hexenyl acetate, cis-3-hexenyl acetate, cis-3-hexenyl capronate, trans-2-hexenyl capronate, cis-3-hexenyl formiate, cis-2-hexyl acetate, cis-3-hexyl acetate, trans-2-hexyl acetate, cis-3-hexyl formiate, para-hydroxybenzylaceton, isoamyl alcohol, isoamyliso valerianate, isobutyl butyrate, isobutyraldehyde, isoeugenol methylether, isopropylmethyl thiazol, lauric acid, levulinic acid, linalool, linalooloxid, linalyla cetate, menthol, menthofuran, methylanthranilate, methylbutanol, methylbuttersaure, 2-methylbutylacetate, methylcapronate, methylcinnamate, 5-methylfurfural, 3,2,2-methylcyclopentenolon, 6,5,2-methylheptenon, methyldihydrojasmonate, methyljasmonate, 2-methylmethyl-butyrate, 2-methyl-2-pentenolic acid, methyl thiobutyrate, 3,1-methyl thiohexanol, 3-methyl thiohexylacetate, nerol, neryl acetate, trans,trans-2,4-nonadienal, 2,4-nonadienol, 2,6-nonadienol, 2,4-nonadienol, nootkateon, delta octalactone, gamma octalactone, 2-octanol, 3-octanol, 1,3-octenol, 1-octyl acetate, 3-octylacetate, palmitic acid, paraldehyde, phellandren, pentandion, phenylethyl acetate, phenylethylalcohol, phenylethyl alcohol, phenylethyl isovalerianate, piperonal, propionaldehyde, propyl butyrate, pulegon, pulegol, sinensal, sulfurol, terpinen, terpineol, terpinolen, 8,3-thiomenthanone, 4,4,2-thiomethylpentanone, thymol, delta undecalactone, gamma undecalactone, valencen, valeric acid, vanillin, acetoin, ethylvanillin, ethylvanillin isobutyrate (= 3-ethoxy-4-isobutyryloxybenzaldehyde), 2,5-dimethyl-4-hydroxy-3(2H)-furanon and its derivatives (preferably homofuraneol (= 2-ethyl-4-hydroxy-5-methyl-3(2H)-furanon), homofuronol (= 2-ethyl-5-methyl-4-hydroxy-3(2H)-furanon und 5-ethyl-2-methyl-4-hydroxy-3(2H)-furanon), maltol und and ist derivatives (preferably ethyl maltol), cumarin its derivatives, gamma lactone (preferably gamma undecalactone, gamma nonalactone, gamma decalactone), delta-lactone (preferably 4-methyldelta decalactone, massoi lactone, delta decalactone, tuberolactone), methylsorbate, divanillin, 4-hydroxy-2(oder 5)-ethyl-5(oder 2)-methyl-3(2H)furanone, 2-hydroxy-3-methyl-2-cyclopentenone, 3-hydroxy-4,5-dimethyl-2(5H)-furanone, acetic acid isoamylester, butyric acid ethylester, butyric acid-n-butylester, butyric acid isoamylester, 3-methyl-butyric acid ethylester, n-hexanoic acid ethylester, n-hexanoic acid allylester, n-hexanoic acid-n-butylester, n-octanoic acid ethylester, ethyl-3-methyl-3-phenyl glycidate, ethyl-2-trans-4-cis-decadienoate, 4-(p-hydroxyphenyl)-2-butanone, 1,1-dimethoxy-2,2,5-trimethyl-4-hexane, 2,6-dimethyl-5-hepten-1-al und phenyl acetaldehyde, 2-methyl-3-(methylthio)furane, 2-methyl-3-furanthiol, bis(2-methyl-3-furyl)disulfide, furfurylmercaptane, methional, 2-acetyl-2-thiazoline, 3-mercapto-2-pentanone, 2,5-dimethyl-3-furanthiol, 2,4,5-trimethylthiazole, 2-acetylthiazole, 2,4-dimethyl-5-ethylthiazol, 2-acetyl-1-pyrrolin, 2-methyl-3-ethylpyrazin, 2-ethyl-3,5-dimethylpyrazin, 2-ethyl-3,6-dimethylpyrazin, 2,3-diethyl-5-methylpyrazin, 3-isopropyl-2-methoxypyrazin, 3-isobutyl-2-methoxypyrazin, 2-acetylpyrazin, 2-pentylpyridin, (E,E)-2,4-decadienal, (E,E)-2,4-nonadienal, (E)-2-octenal, (E)-2-nonenal, 2-undecenal, 12-methyltridecanal, 1-penten-3-on, 4-hydroxy-2,5-dimethyl-3(2H)-furanon, guajakol, 3-hydroxy-4,5-dimethyl-2(5H)-furanon, 3-hydroxy-4-methyl-5-ethyl-2(5H)-furanon, cinnamaldehyde, Cinnamalcohol, methyl salicylate, isopulegol and not explicitly mentioned stereo isomers, enantiomers, position isomers, diasteroemers, cis/trans isomers and epimers of these compounds.

8. Inclusion product according to Claim 7, obtained or obtainable according to a process comprising the following steps:

   (i) preparing a mixture of a maltodextrin fraction according to any of Claims 1 to 4 in water at a pH of from 5-9, whereby the amount of said maltodextrin fraction (dry matter) in the mixture ranges from 5-50 wt.-%
   (ii) dissolving said maltodextrin fraction of the mixture prepared in step (i) by heating said mixture to 50-100 °C at most at 1,080 hPa, so that at least 70 wt.-% of said maltodextrin fraction is dissolved;
   (iii) cooling of the solution obtained from step (ii) to a temperature of at least 1-30 °C to prepare a dispersion of retrograded maltodextrins, and
   (iv) adding of an aroma compound or of aroma compounds to be included to the solution prior or during step (iii).

9. Inclusion product according to Claim 8, **characterized in that**

   - step (iv) is conducted in a way that the ratio of the total amount of added aroma compounds on one hand and maltodextrin fraction (dry) on the other is 0.01:1 to 2:1, and/or
   - in step (iv) an aroma compound is added at a temperature of the solution of at least 30 °C; and/or
   - one or more further carriers are added to the inclusion product subsequent to step (ii), said carriers being selected from gum Arabic, starch octenylsuccinate, alginates, modified celluloses, such as for example carboxymethyl cellulose, methyl cellulose, ethyl cellulose, agar, carrageen, carob gum, guar, xanthan, traganth, gellan, pectin, modified starches such as for example oxidised starch, phosphate starches, acetylated starches, starch adipates as well as hydroxypropyl starches, on condition that the ratio between carriers and maltodextrin fraction (dry matter) ranges from 0.05 to 3:1.

10. Composition or semi-finished good dedicated for nutrition or pleasure comprising an inclusion product according to any of Claims 7 to 9.

11. Composition of semi-finished good dedicated to nutrition or pleasure according to Claim 10, **characterized in that** the total amount of inclusion product is 0.001 to 10 wt.-%, calculated on the total amount of said composition or semi-finished good.

12. Process for making an aroma compound-inclusion product comprising the following steps:

   (i) preparing a mixture of a maltodextrin fraction according to any of Claims 1 to 4 in water at a pH of from 5-9, whereby the amount of said maltodextrin fraction (dry matter) in the mixture ranges from 5-50 wt.-%
(ii) dissolving said maltodextrin fraction of the mixture prepared in step (i) by heating said mixture to 50-100 °C at most at 1,080 hPa, so that at least 70 wt.-% of said maltodextrin fraction is dissolved;
(iii) cooling of the solution obtained from step (ii) to a temperature of at least 1-30 °C to prepare a dispersion of retrograded maltodextrins, and
(iv) adding of an aroma compound or of aroma compounds to be included to the solution prior or during step (iii).

13. Use of a maltodextrin fraction according to any of Claims 1 to 4 for preparing an aroma compound-inclusion product.

**Revendications**

1. Fraction isolée, rétrogradée de maltodextrine, **caractérisée en ce que**

a) une fraction isolée à 25% en poids de maltodextrine isolée, par rapport à la teneur en mateière sèche de maltodextrine, à une températeure de 100°C, et à 1013 hPa et à un pH de 7, est soluble dans l'eau à raison de plus de 95% en poids dans l'eau, la solubilité dans l'eau étant à chaque fois mesurée par un procédé présentant les étapes :

(i) préparer une dispersion à partir de 12,5 g de la fraction sèche de maltodextrine dans 37,5 g d'eau à un pH de 7,
(ii) chauffer la dispersion à 100°C et à 1013 hPa pour permettre la dissolution de la fraction de maltodextrine,
(iii) laisser refroidir le mélange chauffé à 50°C,
(iv) centrifuger le mélange refroidi à 12.000 g pendant 15 min,
(v) décanter la phase surnageante,
(vi) mettre en suspension le sédiment avec 37,5 g d'eau à une températeure de 5°C et centrifuger la suspension à 12.000 g pendant 15 min et ensuite décanter la phase surnageante,
(vii) répétez l'étape (vi),
(viii) sécher le sédiment obtenu dans l'étape (vii) et peser le sédiment séché et

b) une dispersion de 25% en poids de la fraction isolée de maltodextrine, par rapport à la teneur en mateière sèche de maltodextrine, dans 75% en poids d'eau, pH 7, après rétrogradateion et un entreposage sous agitateion pendant 24 heures à 5°C, présente une viscosité de 10-500 mPa.s, à chaque fois mesurée à 25°C, 1013 hPa à l'aide d'un viscosimètre plaque-plaque et à une vitesse de cisaillement de 1000 s$^{-1}$,
la fraction rétrogradée de maltodextrine étant préparée au moyen d'un procédé comprenant les étapes :

(i) préparer une maltodextrine présentant une valeur DE (équivalent en dextrose) de 7-14, de préférence de 8-13, plus préférablement de 9-12 et de manière particulièrement préférée de 9-11,
(ii) préparer une solution à 15-70% en poids de la maltodextrine dans de l'eau à une températeure de 10-100°C et à un pH de 5-9,
(iii) rétrograder à une températeure de -5 à 30°C pendant une période de 1-48 h,
(iv) séparer la fraction rétrogradée de maltodextrine,

la maltodextrine de l'étape (i) étant obtenue à partir de l'hydrolyse d'amidon avec des alpha-amylases ou des bêta-amylases.

2. Fraction rétrogradée de maltodextrine selon la revendicateion 1, **caractérisée en ce que** la fraction de maltodextrine présente une teneur en maltodextrine non rétrogradée d'au plus 30% en poids.

3. Fraction rétrogradée de maltodextrine selon la revendicateion 1 ou 2, **caractérisée en ce qu'**un mélange à 25% en poids de la fraction de maltodextrine dans de l'eau à pH 7, à 100°C et à 1013 hPa, présente à l'équilibre une teneur d'au moins 95% en poids de fraction dissoute de maltodextrine.

4. Fraction rétrogradée de maltodextrine selon l'une quelconque des revendicateions 1 à 3, **caractérisée en ce que** sa teneur en eau est de 5 à 10% en poids par rapport à la fraction totale de maltodextrine.

5. Solution de fraction de maltodextrine présentant une teneur en eau de 50-95% en poids, à chaque fois par rapport à la somme de la fraction de maltodextrine (sèche) et de l'eau, **caractérisée en ce que** la fraction de maltodextrine est une fraction de maltodextrine selon l'une quelconque des revendicateions 1 à 4.

6. Solution de fraction de maltodextrine selon la revendicateion 5, **caractérisée en ce que** la fraction de maltodextrine est dissoute à raison d'au moins 70% en poids, par rapport à la fraction totale de maltodextrine.

7. Produit d'inclusion constitué par une ou plusieurs substances aromateisantes et une fraction de maltodextrine selon l'une quelconque des revendicateions 1 à 4, **caractérisé en ce que** le produit

- présente une teneur de 60-99,8% en poids de fraction de maltodextrine selon l'une quelconque des revendicateions 1 à 4,
- présente une teneur de 0,1-10% en poids de substance(s) aromateisante(s) incluses(s) et
- présente une teneur de 0,1-30% en poids de substance(s) aromateisante(s) dispersée(s)

à chaque fois par rapport à la teneur totale de poids à sec de fraction de maltodextrine et de substances aromateisantes incluses et dispersées,
les substances aromateisantes étant choisies dans le groupe constitué par l'acétophé-none, le capronatee d'allyle, l'alpha-ionone, la bêta-ionone, l'anisaldéhyde, l'acétatee d'anisyle, le formiatee d'anisyle, le benzaldéhyde, le benzothiazole, l'acétatee de benzyle, l'alcool benzylique, le benzoatee de benzyle, la bêta-ionone, le butyratee de butyle, le capronatee de butyle, le phtalide de butylidène, la carvone, le camphène, le caryo-phyllène, le cinéol, l'acétatee de cinnamyle, le citral, le citronellol, le citronellal, l'acé-tatee de citronellyle, l'acétatee de cyclohexyle, le cymol, la damascone, la décalactone, la dihydrocoumarine, l'anthranilatee de diméthyle, l'anthranilatee de diméthyle, la do-décalactone, l'acétatee d'éthoxyéthyle, l'acide éthylbutyrique, le butyratee d'éthyle, le caprinatee d'éthyle, le capronatee d'éthyle, le crotonatee d'éthyle, l'éthylfuranéol, l'éthylguajacol, l'isobutyratee d'éthyle, l'isovalérianatee d'éthyle, le lactatee d'éthyle, le méthylbutyratee d'éthyle, le propionatee d'éthyle, l'eucalyptol, l'eugénol, l'heptylatee d'éthyle, la 4-(p-hydroxyphényl)-2-butanone, la gamma-décalactone, le géraniol, l'acétatee de géranyle, l'acétatee de géranyle, l'aldéhyde de pamplemousse, le dihydrojasmonatee de méthyle (par exemple Hedion®), l'héliotropine, la 2-heptanone, la 3-heptanone, la 4-heptanone, le trans-2-hepténal, le cis-4-hepténal, le trans-2-hexénal, le cis-3-hexénol, l'acide trans-2-hexénoïque, l'acide trans-3-hexénoïque, l'acétatee de cis-2-hexényle, l'acétatee de cis-3-hexényle, le capronatee de cis-3-hexényle, le capronatee de trans-2-hexényle, le formiatee de cis-3-hexényle, l'acétatee de cis-2-hexyle, l'acétatee de cis-3-hexyle, l'acétatee de trans-2-hexyle, le formiatee de cis-3-hexyle, la para-hydroxybenzylacétone, l'alcool isoamylique, l'isovalérianatee d'isoamyle, le butyratee d'isobutyle, l'isobutyraldéhyde, l'iso-eugénolméthyléther, l'isopropylméthylthiazole, l'acide laurique, l'acide léavulique, le linalol, l'oxyde de linalol, l'acétatee de linalyle, le menthol, le menthofurane, l'anthranilatee de méthyle, le méthylbutanol, l'acide méthylbutyrique, l'acétatee de 2-méthylbutyle, le capronatee de méthyle, le cinnamatee de méthyle, le 5-méthylfurfural, la 3,2,2-méthylcyclopenténolone, la 6,5,2-méthylhepténone, le dihydrojasmonatee de méthyle, le jasmonatee de méthyle, le 2-méthylbutyratee de méthyle, l'acide 2-méthyl-2-penténolique, le thiobutyratee de méthyle, le 3,1-méthylthiohexanol, l'acétatee de 3-méthylthiohexyle, le nérol, l'acétatee de néryle, le trans,trans-2,4-nonadiénal, le 2,4-nonadiénol, le 2,6-nonadiénol, le 2,4-nonadiénol, la nootkateone, la delta-octalactone, la gamma-octalactone, le 2-octanol, le 3-octanol, le 1,3-octénol, l'acétatee de 1-octyle, l'acétatee de 3-octyle, l'acide palmitique, le paraldéhyde, le phellandrène, la pentanedione, l'acétatee de phényléthyle, l'alcool phényléthylique, l'alcool phényléthylique, l'isovalérianatee de phényléthyle, le pipéronal, le propionaldéhyde, le butyratee de propyle, le pulégon, le pulégol, le sinensal, le sulfurol, le terpinène, le terpinéol, les terpinols, la 8,3-thiomenthanone, la 4,4,2-thiométhylpentanone, le thymol, la delta-undécalactone, la gamma-undécalactone, le valencène, l'acide valérianique, la vanilline, l'acétoïne, l'éthylvanilline, l'isobutyratee d'éthylvanilline (= 3-éthoxy-4-isobutyryloxybenzaldéhyde), la 2,5-diméthyl-4-hydroxy-3(2H)-furanone et ses dérivés (parmi lesquels de préférence l'homofuranéol (= 2-éthyl-4-hydroxy-5-méthyl-3(2H)-furanone), l'homofuronol (= 2-éthyl-5-méthyl-4-hydroxy-3(2H)-furanone et 5-éthyl-2-méthyl-4-hydroxy-3(2H)-furanone), le maltol et les dérivés de maltol (parmi lesquels de préférence l'éthylmaltol), la coumarine et les dérivés de la coumarine, les gamma-lactones (parmi lesquelles de préférence la gamma-undécalactone, la gamma-nonalactone, la gamma-décalactone), la delta-lactone (parmi lesquels de préférence la 4-méthyldeltadécalactone, la massoilactone, la deltadécalac-tone, la tubérolactone), le sorbatee de méthyle, la divanilline, la 4-hydroxy-2(ou 5)-éthyl-5(ou 2)-méthyl-3(2H)furanone, la 2-hydroxy-3-méthyl-2-cyclopenténone, la 3-hydroxy-4,5-diméthyl-2(5H)-furanone, l'ester isoamylique de l'acide acétique, l'ester éthylique de l'acide butyrique, l'ester n-butylique de l'acide butyrique, l'ester isoamylique de l'acide butyrique, l'ester éthylique de l'acide 3-méthylbutyrique, l'ester éthylique de l'acide n-hexanoïque, l'ester allylique de l'acide n-hexanoïque, l'acide n-butylique de l'acide n-hexanoïque, l'ester éthylique de l'acide n-octanoïque, le 3-méthyl-3-phénylglycidatee d'éthyle, le 2-trans-4-cisdécadiénoatee d'éthyle, la 4-(p-hydroxyphényl)-2-butanone, le 1,1-diméthoxy-2,2,5-triméthyl-4-hexane, le 2,6-diméthyl-5-heptén-1-al et le phénylacétaldéhyde, le 2-méthyl-3-(méthylthio)furane, le 2-méthyl-3-furanethiol, le disulfure de bis(2-méthyl-3-furyle), le furfurylmercaptan, le méthional, la 2-acétyl-2-thiazoline, la 3-mercapto-2-pentanone, le 2,5-diméthyl-3-furanethiol, le 2,4,5-triméthylthiazole, le 2-acétylthiazole, le 2,4-diméthyl-5-éthylthiazole, la 2-acétyl-1-pyrroline, la 2-méthyl-3-éthylpyrazine, la 2-éthyl-3,5-diméthylpyrazine, la 2-éthyl-3,6-diméthylpyrazine, la 2,3-diéthyl-5-méthylpyrazine, la 3-isopropyl-2-méthoxypyrazine, la 3-isobutyl-2-méthoxypyrazine, la 2-acétylpyrazine, la 2-pentylpyridine, le (E,E)-2,4-décadiénal, le (E,E)-2,4-nonadiénal, le (E)-2-octénal, le (E)-2-nonénal, le 2-undécénal, le 12-méthyltridécanal, la 1-pentén-3-one, la 4-hydroxy-2,5-diméthyl-3(2H)-furanone, le guajacol, la 3-hydroxy-4,5-diméthyl-2(5H)-furanone, la 3-hydroxy-4-méthyl-5-éthyl-2(5H)-furanone, l'aldéhyde cinnamique, l'alcool cinnamique, le salicylatee de méthyle, l'isopulégol ainsi que les stéréo-isomères, les énantiomères, les isomères de position, les diastéréo-isomères, les isomères cis/trans ou les épimères (non explicitement mentionnés ici) de ces substances.

8. Produit d'inclusion selon la revendicateion 7, préparé ou pouvant être préparé par un procédé comprenant les étapes :

(i) préparer un mélange d'une fraction de maltodextrine selon l'une quelconque des revendicateions 1 à 4 dans de l'eau à un pH de 5-9, la teneur en maltodextrine (teneur en mateière sèche) dans le mélange étant de 5 - 50% en poids,
(ii) dissoudre la fraction de maltodextrine du mélange préparé dans l'étape (i) par chauffage du mélange à 50-100°C à au plus 1080 hPa, de manière telle qu'au moins 70% en poids de la fraction de maltodextrine sont dissous,
(iii) laisser refroidir la solution obtenue dans l'étape (ii) à une températeure d'au plus 1-30°C pour préparer une dispersion de maltodextrine rétrogradée et
(iv) ajouter la/les substance(s) aromateisante(s) à inclure à la solution avant ou pendant l'étape (iii).

9. Produit d'inclusion selon la revendicateion 8, **caractérisé en ce que**

- l'étape (iv) est réalisée de manière telle que le rapport de la totalité de substances aromateisantes ajoutées à la fraction de maltodextrine (sèche) est de 0,01:1 à 2:1 et/ou
- dans l'étape (iv), on ajoute une substance aromateisante à une températeure de la solution d'au plus 30°C, et/ou
- après l'étape (iii), le produit d'inclusion est additionné d'une ou de plusieurs autres substances support, choisie(s) parmi la gomme arabique, le succinatee d'octényle d'amidon, les alginatees, les celluloses modifiées, par exemple la carboxyméthylcellulose, la méthylcellulose, l'éthylcellulose, l'agar, le carraghénane, la farine de noyaux de caroube, la gomme guar, le xanthane, la gomme adragante, le gellane, la pectine, les amidons modifiés, par exemple l'amidon oxydé, les amidons phosphateés, l'amidon acétylé, les adipatees d'amidon ainsi que les hydroxypropylamidons, de telle sorte que le rapport des substances support à la fraction de maltodextrine (poids à sec) est de 0,05:1 à 3:1.

10. Préparateion ou produit semi-fini servant à l'alimentateion ou à la consommateion, comprenant un produit d'inclusion selon l'une quelconque des revendicateions 7 à 9.

11. Préparateion ou produit semi-fini servant à l'alimentateion ou à la consommateion selon la revendicateion 10, **caractérisé en ce que** la teneur totale de produit d'inclusion par rapport au poids total de la préparateion ou du produit semi-fini est de 0,001 à 10% en poids.

12. Procédé de préparateion pour un produit d'inclusion de substance(s) aromateisante(s), comprenant les étapes

(i) préparer un mélange d'une fraction de maltodextrine selon l'une quelconque des revendicateions 1 à 4 dans de l'eau à un pH de 5-9, la teneur en maltodextrine (teneur en mateière sèche) dans le mélange étant de 5 - 50% en poids,
(ii) dissoudre la fraction de maltodextrine du mélange préparé dans l'étape (i) par chauffage du mélange à 50-100°C à au plus 1080 hPa, de manière telle qu'au moins 70% en poids de la fraction de maltodextrine sont dissous,
(iii) laisser refroidir la solution obtenue dans l'étape (ii) à une températeure d'au plus 1-30°C pour la préparateion d'une dispersion de maltodextrine rétrogradée et
(iv) ajouter la/les substance(s) aromateisante(s) à inclure à la solution avant ou pendant l'étape (iii).

13. Utilisateion d'une fraction de maltodextrine selon l'une quelconque des revendicateions 1 à 4 pour préparer un produit d'inclusion de substance(s) aromateisante(s).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010196542 A1
- WO 2006106519 A2
- WO 2006106520 A2
- EP 2010057365 W
- EP 1362869 A1

**In der Beschreibung aufgeführte Nicht-Patentliteratur**

- **HOFFMANN, H. ; MAUCH, W. ; UNTZE W.** Zucker und Zuckerwaren. 2004, vol. 1, 234f